# EUROPEAN PATENT APPLICATION

(11) **EP 4 492 232 A1**
(43) Date of publication of application: **15.01.2025**
(21) Application number: 23854038.9
(22) Date of filing: 06.06.2023
(51) Int. Cl.: G06F 9/48

(54) **WORKFLOW PROCESSING METHOD AND APPARATUS, AND DEVICE, STORAGE MEDIUM AND PROGRAM PRODUCT**

(30) Priority: 15.08.2022 CN 202210973960
(71) Applicant: Tencent Technology (Shenzhen) Company Limited, Shenzhen, Guangdong 518057 (CN)
(72) Inventor: WEN, Guanchao, Shenzhen, Guangdong 518057 (CN)
(74) Representative: Nederlandsch Octrooibureau
(86) International application number: PCT/CN2023/098589
(87) International publication number: WO 2024/037132

(57) **Abstract**

A workflow processing method is provided, including: acquiring a to-be-executed task instance corresponding to a target workflow (402); sequentially loading and executing, according to a pointing relationship between a plurality of subtask instances of the task instance, the subtask instances (404); generating, during the sequentially loading and executing the subtask instances if a target subtask instance indicating a signal callback subtask is currently loaded, a callback interface for effecting a callback of the target subtask instance, and suspending loading and execution of the subtask instances of the task instance (406); and resuming, from the target subtask instance, loading and execution of the subtask instances of the task instance after the callback interface corresponding to the target subtask instance is invoked (408).

## Description

### RELATED APPLICATION

This application claims priority to Chinese Patent Application No. 202210973960.0, entitled "WORKFLOW PROCESSING METHOD AND APPARATUS, DEVICE, STORAGE MEDIUM, AND PROGRAM PRODUCT" filed with the China National Intellectual Property Administration on August 15, 2022, which is incorporated by reference in its entirety.

### FIELD OF THE TECHNOLOGY

This application relates to the field of computer technologies, and in particular, to a workflow processing method and apparatus, a system, a computer device, a storage medium, and a computer program product.

### BACKGROUND OF THE DISCLOSURE

Low-code is an intuitive visual software development method, which can provide professional developers and service personnel with a platform to quickly create application programs. The platform may be used as a workflow engine system to automate workflows. Generally, a workflow engine designs an entire workflow process by visually dragging various subtasks to realize various code features in programming and reduce programming development costs.

Currently, when a designed workflow is executed, the workflow engine loads and executes an entire task instance of the workflow at a time, and if the workflow includes time-consuming subtasks that need to interact with a third-party system, such as poll query results from the third-party system, the entire task instance of the workflow may occupy memory resources of an execution device for a long time and consume overall running resources of the workflow engine, resulting in low resource utilization efficiency.

### SUMMARY

According to a first aspect, this application provides a workflow processing method. The method includes:
acquiring a to-be-executed task instance corresponding to a target workflow;
determining a pointing relationship between a plurality of subtask instances of the task instance according to a process data structure of the task instance, and sequentially loading and executing, starting with the first subtask instance of the task instance, the subtask instances according to the pointing relationship;
generating, if a target subtask instance indicating a signal callback subtask is currently loaded, a callback interface for effecting a callback of the target subtask instance, and suspending loading and execution of the subtask instances of the task instance; and
resuming, from the target subtask instance, loading and execution of the subtask instances of the task instance after the callback interface corresponding to the target subtask instance is invoked.

According to a second aspect, this application further provides a workflow processing apparatus. The apparatus includes:
an acquisition module configured to acquire a to-be-executed task instance corresponding to a target workflow; and
an execution module configured to determine a pointing relationship between a plurality of subtask instances of the task instance according to a process data structure of the task instance, and sequentially load and execute, starting with the first subtask instance of the task instance, the subtask instances according to the pointing relationship;
the execution module being further configured to generate, if a target subtask instance indicating a signal callback subtask is currently loaded, a callback interface for effecting a callback of the target subtask instance, and suspend loading and execution of the subtask instances of the task instance; and resume, from the target subtask instance, loading and execution of the subtask instances of the task instance after the callback interface corresponding to the target subtask instance is invoked.

According to a third aspect, this application further provides a workflow processing system, the system including a scheduling node, a distributed execution node, and a database,
the scheduling node being configured to create, when an execution instruction of a target workflow is received, a task instance corresponding to the target workflow in the database;
the execution node being configured to acquire, from the database, a to-be-executed task instance corresponding to the target workflow, determine a pointing relationship between a plurality of subtask instances of the task instance according to a process data structure of the task instance, and sequentially load and execute, starting with the first subtask instance of the task instance, the subtask instances according to the pointing relationship;
the execution node being further configured to generate, if a target subtask instance indicating a signal callback subtask is currently loaded, a callback interface for effecting a callback of the target subtask instance, and suspend loading and execution of the subtask instances of the task instance; and
the execution node being further configured to resume, from the target subtask instance, loading and execution of the subtask instances of the task instance after the callback interface corresponding to the target subtask instance is invoked.

According to a fourth aspect, this application further provides a computer device. The computer device includes a memory and a processor, the memory storing computer-readable instructions, and the processor, when executing the computer-readable instructions, implementing operations of the workflow processing method described above.

According to a fifth aspect, this application further provides a computer-readable storage medium. The computer-readable storage medium has computer-readable instructions stored therein, the computer-readable instructions, when executed by a processor, implementing operations of the workflow processing method described above.

According to a sixth aspect, this application further provides a computer program product. The computer program product includes computer-readable instructions, the computer-readable instructions, when executed by a processor, implementing operations of the workflow processing method described above.

### BRIEF DESCRIPTION OF THE DRAWINGS

To describe the technical solutions in the embodiments of this application more clearly, the following briefly introduces the accompanying drawings required for describing the embodiments. It is clear that the accompanying drawings in the following description show only some embodiments of this application, and a person of ordinary skill in the art may still derive other drawings from these accompanying drawings without creative efforts.
FIG. 1 is a diagram of an application environment of a workflow processing method according to an embodiment.
FIG. 2 is a schematic flowchart of workflow processing of a workflow-based execution mechanism in the related art.
FIG. 3 is a schematic flowchart of workflow processing of a subtask-based execution mechanism according to an embodiment.
FIG. 4 is a schematic flowchart of a workflow processing method according to an embodiment.
FIG. 5 is a schematic diagram of a task instance message queue according to an embodiment.
FIG. 6 is a schematic diagram of a subtask instance message queue according to an embodiment.
FIG. 7 is a schematic diagram of a global variable table according to an embodiment.
FIG. 8 is a schematic flowchart of execution of a subtask instance of a signal callback type according to an embodiment.
FIG. 9 is a schematic flowchart of externally calling a callback interface according to an embodiment.
FIG. 10 is a schematic flowchart of a workflow processing method according to a specific embodiment.
FIG. 11 is a schematic flowchart of triggering execution of a workflow through a webhook trigger according to an embodiment.
FIG. 12 is a schematic diagram of an interface for transmitting a trigger instruction to a specified account according to an embodiment.
FIG. 13 is a schematic diagram of an interface for configuring a specified account according to an embodiment.
FIG. 14 is a schematic diagram of an interface for configuring an instruction trigger according to an embodiment.
FIG. 15 is a schematic diagram of a system instruction according to an embodiment.
FIG. 16 is a schematic diagram of an interface for viewing a permission instruction according to an embodiment.
FIG. 17 is a schematic flowchart of triggering execution of a workflow through an instruction trigger according to an embodiment.
FIG. 18 is a schematic diagram of an interface for configuring a timed trigger according to an embodiment.
FIG. 19 is a schematic diagram of a web interface of a workflow engine system according to an embodiment.
FIG. 20 is a schematic diagram of an interface of credential management according to an embodiment.
FIG. 21 is a schematic diagram of an interface for configuring a subtask that needs to access a database according to an embodiment.
FIG. 22 is a schematic interface diagram of a workflow execution record management interface according to an embodiment.
FIG. 23 is a schematic diagram of an interface for creating a workflow editor according to an embodiment.
FIG. 24 shows a parameter configuration interface for a subtask of a signal callback type according to an embodiment.
FIG. 25 is a schematic diagram of generating a callback interface according to an embodiment.
FIG. 26 is a schematic diagram of a process data structure of a workflow according to an embodiment.
FIG. 27 is a structural block diagram of a workflow processing apparatus according to an embodiment.
FIG. 28 is a diagram of an internal structure of a computer device according to an embodiment.
FIG. 29 is a diagram of an internal structure of a computer device according to another embodiment.

### DESCRIPTION OF EMBODIMENTS

To make the objectives, technical solutions, and advantages of this application clearer, the following further describes this application in detail with reference to the accompanying drawings and embodiments. Specific embodiments described herein are only intended to explain this application, and are not intended to limit this application.

First, some concepts involved in the embodiments of this application are explained as follows:

A workflow represents an actual service model through a flowchart, which may be configured for completing a specific service function in an automated manner.

A task instance refers to a specific workflow instance. When a workflow is triggered for execution, a specific execution task, that is, a task instance, may be generated. According to different input parameters, the task instance may be executed, and different execution results may be obtained.

A subtask refers to an application module, which encapsulates a common function or interface service. The subtask may be understood as an atomic task, which is the most basic execution unit in a workflow. A workflow generally includes a plurality of subtasks.

For a subtask instance, a subtask may be executed using different parameters. A subtask is executed using a specific parameter, which is an instance. This instance is a subtask instance. The subtask instance is specific instantiation of a subtask. A difference between the two may be understood as follows: The subtask is a template and uses a default parameter, while the corresponding subtask instance uses a certain template and uses a specific parameter.

A workflow engine is a routing controller that executes a workflow. A process is a workflow, which corresponds to an actual service flow. An execution route of the workflow is controlled by input data and output data of a current subtask instance. A flow rule of the workflow is specified when the workflow is created and defined. The workflow engine is to find out a next execution direction of the workflow according to context of each subtask instance.

A workflow definition language refers to a syntax specification used when a workflow is designed. This article defines a workflow in a simple and universal manner such as JSON.

A subtask of a signal callback type refers to a subtask that needs to interact with the outside (such as a third-party system), also called a time-consuming subtask. For a subtask instance corresponding to the subtask of the signal callback type, in embodiments of this application, a callback ID (CallbackId) may be assigned to and generated for the subtask. This callback ID is mapped one-to-one with a subtask instance ID. The subtask instance may be located through this callback ID.

A callback interface is generated for a subtask of a signal callback type, which refers to an interface externally (such as a third-party system) invoked back, after loading and execution of a subtask instance of a task instance are suspended, to wake up a subtask instance of the signal callback type to continue executing the task instance. An address format of the interface may be http: //xxx.com/v1/callback/signal/CallbackId. By calling the interface with a POST method of an http request, parameters may be inputted, and the task instance may be woken up to continue execution from the subtask instance of the signal callback type.

A trigger is a subtask that triggers a workflow to run and is a starting subtask of the workflow. The trigger may be of the following type: a timer, a webhook, an instruction trigger, or the like.

Credentials mainly refer to parameter information required to execute some important subtasks, including information such as an account password, a token, and a key. Different subtasks may correspond to different credential parameters. For example, a subtask configured for accessing a database may require a credential.

A path syntax expression may be indexed to variables of input data or output data of each subtask instance in a workflow through a path in the form of { { AppInstId.data.0.name}}, so as to dynamically parse and obtain the input and output data of each subtask instance at runtime.

A message queue is a first-in-first-out data structure, for example, middleware such as redis, which is generally used in a distributed system.

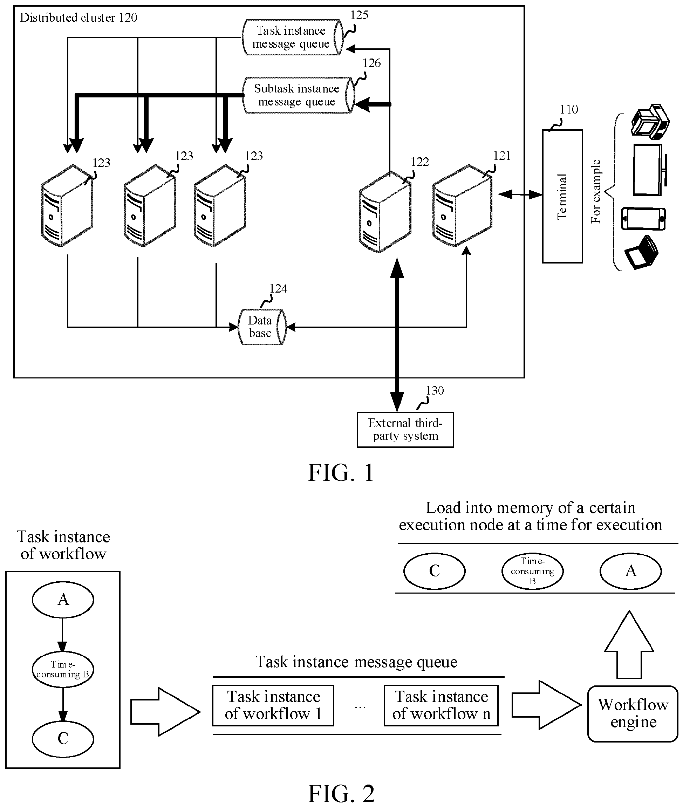

A workflow processing method provided in all embodiments of this application is applicable to an application environment shown in FIG. 1. The application environment presents technical architecture of a workflow engine system, mainly including a terminal 110 and a distributed cluster 120. The distributed cluster 120 includes a web service node 121, a scheduling node 122, distributed execution nodes 123, a database 124, a task instance message queue 125, and a subtask instance message queue 126.

Referring to FIG. 1, in the application environment, a developer or service personnel may open a front-end webpage of the workflow engine system through the terminal 110, create a workflow through the webpage, query for an execution record of the workflow, and the like. The terminal 110 communicates with the web service node 121 in the distributed cluster 120 over a network. The web service node 121 may save the created workflow to the database 124, and may also access the execution record of the workflow from the database 124 and feed the execution record back to the terminal for display to the developer or staff.

When receiving an execution instruction for a target workflow, the scheduling node 122 may create a corresponding task instance in the database 124 and push the created task instance to the task instance message queue 125 for consumption and execution by the distributed execution nodes 123. After the execution nodes 123 consume the task instance from the task instance message queue 125, the scheduling node 122 sequentially pushes subtask instances included in the task instance to the subtask instance message queue 126 for consumption and sequential loading and execution by the execution nodes 123. The execution nodes 123, after consuming the subtask instances from the subtask instance message queue 126 and loading and executing the subtask instances, update execution data of the subtask instances in the database 124 according to execution results, and update running statuses of the subtask instances.

The scheduling node may alternatively be any one of the distributed execution nodes. Web services provided by the web service node may alternatively be integrated into any execution node. The terminal 110 may be, but is not limited to, a desktop computer, a notebook computer, a smart phone, a tablet computer, an Internet of Things (IoT) device, and a portable wearable device. The IoT device may be a smart speaker, a smart television, a smart air conditioner, a smart in-vehicle device, or the like. The portable wearable device may be a smart watch, a smart bracelet, a head-mounted device, or the like. The web service node, the scheduling node, and each execution node in the server cluster 120 may each be a stand-alone physical server, a server cluster including a plurality of physical servers or a distributed system, or a cloud server providing a cloud computing service.

In some embodiments, referring to FIG. 1, the application environment may further include a third-party system 130. When execution of a certain subtask instance depends on the third-party system 130 (such a subtask instance is a subtask instance of a signal callback type in this embodiment of this application), for example, if a functional interface of the third-party system 130 needs to be invoked to obtain an execution result of the subtask instance, the execution node 123 needs to interact with the third-party system 130.

The workflow engine mentioned in this embodiment of this application is a low-code technology that designs processes, lowers learning thresholds, and improves efficiency by visual drag-and-drop programming. Through this low-code technology, various code features in programming can be realized, and programming development costs can be reduced in a low-code manner. Various process features can be realized through visual programming.

In the related art, the workflow engine is a workflow-based execution mechanism: a workflow task instance is loaded into memory as a whole for execution, as shown in FIG. 2. This means that if there is a subtask instance B in the task instance of this workflow, which is a time-consuming subtask that needs to interact with the third-party system, such as an operation of polling query results, the entire task instance (as shown in FIG. 2, the task instance includes three subtask instances A, B, and C) of this workflow may occupy the memory all the time and consume running resources of the workflow engine system, which may not fully utilize overall resources of the workflow engine system. Moreover, since there are always tasks running in the backend, upgrade of the workflow engine system is also easily affected.

Such a workflow-based execution mechanism cannot separate the subtask instances for execution. As a result, all subtask instances included in the task instance of the workflow need to be executed in the memory. The workflow engine may not release machine memory and CPU resources occupied by the entire task instance of the workflow until all the subtask instances are executed. If the task instance includes a relatively time-consuming subtask instance that needs to interact with the third-party system for a long time, such as the subtask instance B, the task instance of this workflow may occupy the memory for a long time and consume resources. If there are many task instances created based on this workflow, the machine resources may be quickly consumed, causing system abnormalities.

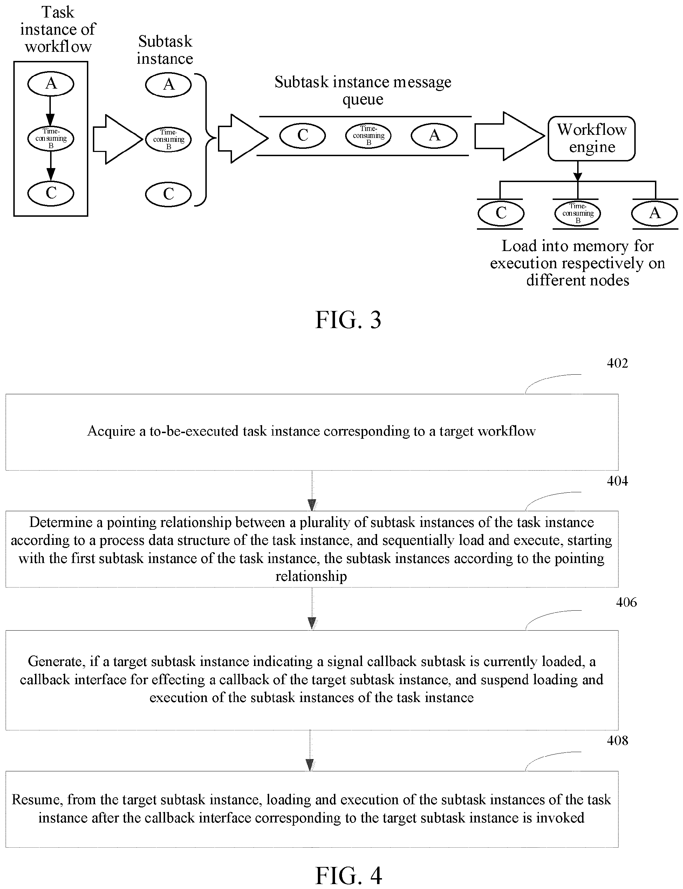

The workflow processing method provided in this embodiment of this application is an execution mechanism based on subtask instances: The subtask instances included in the task instance of the workflow are separated and sequentially loaded and executed. As shown in FIG. 3, the subtask instances A, B, and C are sequentially loaded and executed. Moreover, for the above time-consuming subtask instance that needs to interact with the third-party system, such as the subtask instance B, a capability of suspending and resuming execution of the task instance of the workflow is supported by using a signal callback mechanism. Specifically, when a time-consuming subtask instance that needs to interact with the third-party system and is of a signal callback type is currently loaded, a unique callback interface may be generated, and loading and execution of the entire task instance may be suspended. The task instance of the entire workflow enters a sleep state (the subtask instance A has been executed, resources occupied by the subtask instance A have been released, the subtask instances B and C are temporarily stored in the database, and the workflow currently has no subtask instances running in the memory) until the third-party system calls this callback interface, thereby waking up the subtask instance B, and from the subtask instance B, a subsequent subtask instance in the task instance, that is, the subtask instance C, is continuously loaded and executed. In this way, the problem of long-term occupation of resources by the entire task instance of the workflow in the related art can be solved, greatly improving use efficiency of the resources.

In all embodiments, the execution nodes 123 in the application environment shown in FIG. 1 may acquire a to-be-executed task instance corresponding to a target workflow, sequentially load and execute, according to a pointing relationship between a plurality of subtask instances of the task instance, the subtask instances, during the sequentially loading and executing the subtask instances, generate, if a target subtask instance indicating a signal callback subtask is currently loaded, a callback interface for effecting a callback of the target subtask instance, and suspend loading and execution of the subtask instances of the task instance, and resume, from the target subtask instance, loading and execution of the subtask instances of the task instance after the callback interface is invoked. In all embodiments of the present disclosure, the target subtask instance indicating a signal callback subtask means that the target task instance is of a signal callback type, and the pointing relationship is configured to indicate an ordering relationship between the subtask instances, in particular between temporally adjacent subtask instances.

In all embodiments, as shown in FIG. 4, in all embodiments, a workflow processing method is provided. Description is based on an example in which the method is applied to a computer device (e.g., the scheduling node or any execution node in FIG. 1). The method includes the following operations:
Operation 402: Acquire a to-be-executed task instance corresponding to a target workflow.

A workflow is a process of realizing a certain service function. The process includes a plurality of subtasks. There is a corresponding pointing relationship between the subtasks included in the workflow, that is, an order of execution. For example, if a subtask A points to a subtask B, the subtask B points to both a subtask C and a subtask D, and the subtask C and the subtask D are independent of each other, a corresponding execution order is as follows: The subtask A is executed first, followed by the subtask B, and then the subtask C and the subtask D may be concurrently executed, or the subtask C and subtask the D may be sequentially executed.

The target workflow is a to-be-executed workflow. The task instance corresponding to the target workflow is an object that needs to be specifically processed to achieve execution of the target workflow. The task instance is materialization of the workflow. The workflow is triggered by inputting different parameters and different task instances are obtained. That is, a workflow after being triggered can be used as a to-be-executed workflow, a corresponding task instance may be created, and corresponding subtask instances may be created.

In this embodiment of this application, the target workflow is any one of previously created workflows stored in the database. Referring to the system shown in FIG. 1, the developer or service personnel creates workflows according to a requirement through a front-end webpage of a workflow engine provided by the terminal, the created workflows may be stored in the database, and when the computer device receives an execution instruction triggered for a target workflow in the database, a corresponding task instance is created in the database and the corresponding task instance is obtained.

In all embodiments, regarding workflows for which execution instructions are triggered, the computer device, after creating corresponding task instances, may push the task instances to a task instance message queue for consumption by the distributed execution nodes, thereby concurrently executing the consumed task instances and improving execution efficiency of the workflows. Specifically, operation 402 includes: creating, when an execution instruction for the target workflow is triggered, the task instance corresponding to the target workflow in a task instance table of a database; the task instance table being configured for recording task instance IDs and the process data structure of the task instance, the process data structure including subtask instance IDs and the pointing relationship between the subtask instances; pushing a task instance ID of the created task instance to a task instance message queue; consuming a task instance ID from the task instance message queue; and determining a to-be-executed task instance according to the task instance ID.

The task instance corresponding to the target workflow created in the task instance (execution) table of the database records relevant information of the task instance, including a task instance ID and the process data structure of the task instance as well as a target workflow ID, a running status of the task instance, a start time and an end time of execution of the task instance, an executor triggering execution of the task instance, and the like. The process data structure of the task instance records an execution process of the task instance, that is, the pointing relationship between the subtask instances included in the task instance. The computer device sequentially loads and executes the subtask instances, which means performing traversal and execution according to the pointing relationship between the subtask instances included in the process data structure.

In all embodiments, each task instance in the task instance table includes the following fields:
id: Task instance ID;
workflow_id: Workflow ID;
name: Name;
executor: Executor;
status: Running status of the task instance;
start_at: Start time of execution of the task instance;
end_at: End time of execution of the task instance;
apps: Process data structure of the task instance;
where the process data structure of the task instance may include the following information:
   StartAppInstId: Start subtask instance;
   DestAppInstI: End subtask instance;
   Apps: Array of subtask instances, where each subtask instance includes the following information:
      Name: Name or description of subtask instance description;
      Parameters: Parameters of subtask instances, including parameters, parameter values, parameter types, and parameter description;
      Template: Subtask template used by the subtask instance, such as an HTTP request or a Python script;
      Position: Coordinate position of the subtask instance on a front-end canvas;
      InstId: Subtask instance ID;
      PrevAppInstIds: ID of a previous subtask instance pointed to;
      NextAppInstIds: ID of a next subtask instance pointed to;
      Output: Output result of the subtask instance;
      Error: Error information if an error occurs during execution of the subtask instance;
      Status: Running status of the subtask instance;
      StartTime: Start time of execution of the subtask instance;
      EndTime: End time of execution of the subtask instance.
      As can be seen, a task instance may include a plurality of subtask instances, and each subtask instance has a unique ID to locate a specific subtask instance in the task instance.

Specifically, the computer device, when receiving an execution instruction that triggers a target workflow, creates a corresponding task instance, including relevant information such as a task instance ID, an executor of the task instance, a process data result of the task instance, and a status of the task instance, and persistently stores the created task instance in the task instance table in the database. Then, the computer device further pushes a task instance ID corresponding to the task instance to a task instance message queue (for example, a message format in the queue is: RPUSH execution#queueexecutionId), to allow the distributed execution node to consume a task instance ID from the task instance message queue, reads the task instance table in the database according to the consumed task instance ID, acquires a task instance corresponding to the task instance ID, and starts to execute the task instance after reading relevant information of the task instance.

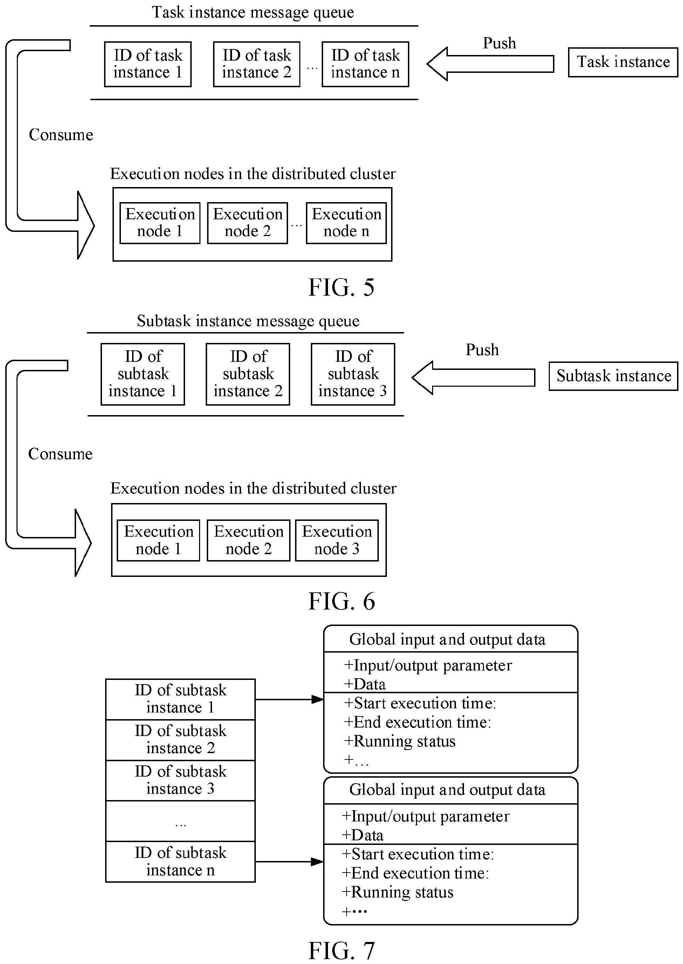

FIG. 5 is a schematic diagram of a task instance message queue according to an embodiment. Referring to FIG. 5, each time a workflow is triggered and executed, a corresponding task instance may be created in the task instance table of the database, and a task instance ID corresponding to the created task instance may be pushed to the task instance message queue. Each distributed execution node monitors the task instance message queue. Once new task instance IDs exist in the message queue, the new task instance IDs may be sequentially consumed in a first-in first-out order and corresponding task instances may be executed.

Operation 404: Determine a pointing relationship between a plurality of subtask instances of the task instance according to a process data structure of the task instance, and sequentially load and execute, starting with the first subtask instance of the task instance, the subtask instances according to the pointing relationship.

According to the previous introduction, the process data structure of the task instance includes subtask instance IDs and a pointing relationship between the subtask instances. The pointing relationship can reflect an execution order of each subtask instance in all the subtask instances in the task instance. The pointing relationship may be represented by an ID of a previous subtask instance pointed to and an ID of a next subtask instance pointed to and be carried in each subtask instance.

Operation 406: Generate, if a target subtask instance indicating a signal callback subtask is currently loaded, a callback interface for effecting a callback of the target subtask instance, and suspend loading and execution of the subtask instances of the task instance.

Operation 408: Resume, from the target subtask instance, loading and execution of the subtask instances of the task instance after the callback interface corresponding to the target subtask instance is invoked.

Based on the previous description, the process data structure of the task instance includes the pointing relationship between the subtask instances included in the task instance. After the callback interface corresponding to the target subtask instance is invoked, the computer device traverses, from the target subtask instance, according to the pointing relationship between the subtask instances included in the process data structure, and sequentially resumes loading and execution of the subtask instances in the task instance whose execution orders are after the target subtask instance.

In all embodiments, the sequentially loading and executing, according to a pointing relationship between a plurality of subtask instances of the task instance, the subtask instances includes: pushing a subtask instance ID corresponding to the first subtask instance to a subtask instance message queue; consuming a subtask instance ID from the subtask instance message queue; loading and executing a current subtask instance according to the subtask instance ID; determining, after execution of the current subtask instance, a subtask instance pointed to by the current subtask instance; and returning to, after a subtask instance ID corresponding to the subtask instance pointed to is pushed to the subtask instance message queue, the operation of consuming a subtask instance ID from the subtask instance message queue to continue until all the subtask instances of the task instance are executed.

FIG. 6 is a schematic diagram of a subtask instance message queue according to an embodiment. Referring to FIG. 6, description is based on an example in which the task instance includes 3 subtask instances: From the first subtask instance of the task instance, after a corresponding subtask instance ID 1 is pushed to the subtask instance message queue and consumed by any execution node, the corresponding subtask instance is loaded into memory for execution. After the execution is completed, a running status and execution data of the subtask instance are updated in the subtask instance table, and a next subtask instance pointed to is acquired. Similarly, after a corresponding subtask instance ID 2 is pushed to the subtask instance message queue and consumed by any execution node, the corresponding subtask instance is loaded into memory for execution, and after the execution is completed, a next subtask instance pointed to is acquired. Similarly, after a corresponding subtask instance ID 3 is pushed to the subtask instance message queue and consumed by any execution node, the corresponding subtask instance is loaded into memory for execution, and after the execution is completed, execution of the entire task instance is completed. During the execution, each distributed execution node monitors the subtask instance message queue. Once new subtask instance IDs exist in the message queue, the new subtask instance IDs may be sequentially consumed in a first-in first-out order and corresponding subtask instances may be executed.

In this way, the plurality of subtask instances of the task instance corresponding to the entire workflow are separated and sequentially loaded and executed, and when the plurality of subtask instances include a time-consuming subtask that needs to interact with the outside, there is no need to load the entire task instance at a time and wait for execution of the time-consuming subtask to lead to long-time occupation of memory and consumption of running resources by the entire task instance, which can greatly improve utilization efficiency of the resources.

In all embodiments, after determining the subtask instance pointed to by the current subtask instance, the computer device persists the subtask instance pointed to to a subtask instance table of a database; the subtask instance table being configured for recording subtask instance IDs, and running statuses and execution data of subtask instances; initializes the running status of the subtask instance to Unprocessed; and updates, after the subtask instance is executed, the running status of the subtask instance to Completed in the subtask instance table, and updates the execution data of the subtask instance.

In this embodiment, after acquiring a to-be-executed task instance, the computer device may determine each subtask instance included in the task instance based on a process data structure of the task instance, persist each subtask instance to the subtask instance table of the database before loading and executing the subtask instance, and initialize the running status of each subtask instance in the subtask instance table to To Be Processed. In this way, the running status of each subtask instance included in the task instance may be acquired in a timely and accurate manner through the subtask instance table. In particular, a running status of a subtask instance of a callback type may be configured for determining whether the subtask instance is consumed for the first time or for the second time. Refer to the following for details.

Specifically, starting with the first subtask instance of the task instance (also called a trigger of the task instance), the computer device pushes an ID of the first subtask instance of the task instance to the subtask instance message queue (appinst_queue). For example, a message format in the queue is: appInst #executionId#appInstId#index, to allow the distributed execution node to consume and then load and execute the corresponding subtask instance. The computer device, as any execution node, after consuming a subtask instance ID of the first subtask instance from the subtask instance message queue, reads the subtask instance table in the database according to the consumed subtask instance ID, acquires a subtask instance corresponding to the subtask instance ID, updates the running status to Being Processed, and starts to execute the subtask instance after reading relevant information of the subtask instance.

In all embodiments, each subtask instance in the subtask instance table includes the following fields:
id: Subtask instance ID:
index: Index of an execution result of the subtask instance;
for example, in a For loop body, the subtask instance may need to be executed multiple times, and Index may sequentially increase from 0; otherwise, Index is 0 by default, indicating one execution. If a subtask instance may be executed multiple times, a plurality of pieces of subtask instance data are created in the subtask instance table, respectively corresponding to each execution result. For example, for a subtask instance in the For loop body, a plurality of execution results of the subtask instance [{app_inst_id=x, index=0}, {app_inst_id=x, index=1}, ..., {app_inst_id=x, index =n}] may be created, and a certain execution result of the subtask instance may be confirmed through the subtask instance ID field app_inst_id and the index field index.
execution_id: Task instance ID;
app_inst_id: Subtask instance ID:
   name App: Subtask name;
   template: Subtask type (such as an HTTP request or a python script);
   status: running status of the subtask instance, including four statuses: To Be Processed, Being Processed, Completed, and Error;
   start_at: Start time of execution of the subtask instance;
   end_at: End time of execution of the subtask instance;
   apps: Data structure of the subtask instance, which records information such as a certain execution result of a current App instance, a previous subtask instance pointed to, a next subtask instance pointed to, input parameters, and runtime data.

The data structure of the subtask instance stores data in a Json structure, which mainly includes the following information:
Index: Index of an execution result of the subtask instance;
MaxIndexCount: Maximum index value configured for recording a number of times the current subtask instance has been executed. The maximum index value is greater than or equal to 1 if in the For loop body, that is, each subtask instance may be executed multiple times. The maximum index value is 1 by default if not in the For loop body, that is, each subtask instance is executed once. When an execution result of a subtask instance in the task instance is to be acquired, a number of times the subtask instance has been executed, that is, MaxIndexCount, needs to be first acquired, and then an execution result of each execution of the subtask instance may be sequentially executed according to the subtask instance identification field app_inst_id and the index field index.
Name: Subtask name:
   Parameters: Parameters of subtask instances, including parameters, parameter values, parameter types, and parameter description;
   Template: Subtask template used by the subtask instance;
   Position: Coordinate position of the subtask instance on a front-end canvas;
   InstId: Subtask instance ID;
   PrevAppInstIds: ID of a previous subtask instance pointed to;
   NextAppInstIds: ID of a next subtask instance pointed to;
   Output: Output result of the subtask instance;
   Error: Error information if an error occurs during execution of the subtask instance;
   Status: Running status of the subtask instance;
   StartTime: Start time of execution of the subtask instance;
   EndTime: End time of execution of the subtask instance.

In all embodiments, the pushing a subtask instance ID corresponding to the subtask instance pointed to to a subtask instance message queue includes: pushing, in a case that the current subtask instance points to a plurality of subtask instances, respective subtask instance IDs of the plurality of subtask instances pointed to to the subtask instance message queue; and the consuming a subtask instance ID from the subtask instance message queue includes: consuming the plurality of subtask instance IDs respectively from the subtask instance message queue through distributed execution nodes, and then concurrently loading and executing the plurality of corresponding subtask instances. Within the purview of this application, the term 'consuming' denotes an operational mechanism inherent to the workflow management system. This mechanism is characterized by the execution nodes' action of extracting sub-task instance identifiers from the sub-task message queue. Subsequently, these nodes proceed to load and execute the respective multitude of sub-task instances in a synchronous and parallel manner, thereby optimizing the operational efficiency of the system.

The current subtask instance points to the plurality of subtask instances, which generally indicates that the plurality of subtask instances are independent of each other and may be concurrently executed. In this case, the computer device may push the respective subtask instance IDs of the plurality of pointed subtask instances to the subtask instance message queue, to allow the distributed execution nodes to consume the plurality of subtask instances respectively from the message queue and then concurrently load and execute the plurality of subtask instances.

For example, if the subtask instance A points to the subtask instances B and C and the subtask instances B and C are executed independently of each other, the computer device may push the two subtask instances to the subtask instance message queue, the distributed execution node 1 consumes an ID of the subtask instance B from the message queue, the execution node 2 consumes an ID of the subtask instance C from the message queue, and then the two subtask instances are concurrently executed on different execution nodes to achieve true concurrent loading and execution.

The entire task instance is loaded into the memory for execution at a time through an execution node, and the subtask instances can only be sequentially executed according to the pointing relationship between the subtask instances of the task instance, so it is clear that only one subtask instance can be executed on a same node at a time, which cannot achieve true concurrency. Upon comparison, in this embodiment, since the plurality of subtask instances of the task instance are separated and sequentially loaded and executed, when a certain subtask instance points to a plurality of subtask instances, the plurality of subtask instances may be respectively loaded and executed by different distributed execution nodes, which achieves true concurrent execution.

In all embodiments, the workflow processing method further includes: parsing the task instance, obtaining global variables of the included subtask instances, and forming and storing a global variable table; the global variables including global input variables and global output variables; updating the global variable table according to corresponding execution data after the current subtask instance is executed; and loading the updated global variable table, obtaining input data corresponding to the global input variable of the subtask instance pointed to, and executing, according to the input data, the subtask instance pointed to.

During the sequential loading and execution of the subtask instances of the task instance, input data of a certain subtask instance may be output data of a previous subtask instance pointed to by the subtask instance. However, since the plurality of subtask instances of the task instance are separated and sequentially loaded and executed, the output data of each subtask instance cannot be directly transmitted between execution nodes. To this end, to ensure that the distributed execution nodes can execute each loaded subtask instance in a smooth and timely manner, the computer device may parse the global variables of the subtask instances of the task instance, and form and store the global variable table. That is, the ID of each subtask instance and the corresponding global variables (including global input variables and global output variables) are correspondingly stored. When the task instance is not executed, each variable in the global variables is a default parameter value. Each time a subtask instance is loaded and executed and execution data is obtained, the global variable table is updated according to the execution data. Before each execution of the subtask instance pointed to, a previously updated global variable table is loaded into the memory. According to the ID of the subtask instance pointed to, the global variable table is read, and input data corresponding to the global input variable of the subtask instance is read. Next, the subtask instance may be executed according to the input data.

FIG. 7 is a schematic diagram of a global variable table according to an embodiment. Referring to FIG. 7, global variables of subtask instances of a currently processed task instance are loaded into memory to form a mapping table between subtask instance IDs and the global variables

In all embodiments,global variables, global input variables, and global output variables serve critical functions within the workflow management system for inter-task instance data sharing and state management. Global variables are the datasets shared among multiple sub-task instances within a workflow, encompassing, but not limited to, input parameters and output results. Global input variables represent the data required for the initiation of a sub-task instance's execution, potentially derived from the outputs of preceding tasks or other external inputs. Conversely, global output variables contain the outcomes generated upon the completion of a sub-task instance, which can subsequently serve as inputs for subsequent tasks. The global variable table acts as a centralized repository that documents and maps these global variables, ensuring consistency and accessibility of data across various stages of the workflow and among different sub-task instances. In this manner, the global variable table facilitates the orderly execution of tasks and smooth data transmission within the workflow.

In all embodiments, the global variable of each subtask instance may be a constant, or may make reference to output data of any previous subtask instance by using a path syntax expression. When a subtask instance pointed to needs to be executed, the computer device locates the corresponding global variable in the global variable table through the ID of the subtask instance. In the case of a path syntax expression, the path syntax expression is parsed into corresponding data according to data corresponding to global variables included in the path syntax expression in the global variable table, to obtain input data of the subtask instance pointed to.

For example, the data structure of the subtask instance includes a parameter field, whose structure is as follows:
<parameter key, parameter value, parameter type, parameter description>
where the parameter type includes: string, boolean, number, and the like. The parameter value may either be a constant (number or string), or make reference to an output result of any previous subtask instance by using the path syntax expression. For example,
<subtask instance Id>.data;
<subtask instance Id>.parameter.<parameter key value>.

By locating the subtask instance IDs, input and output data of any subtask instance of the task instance may be globally acquired, and execution data of each subtask instance may be stored in the database, so that the execution data of the subtask instances can be loaded into the memory and the global variable table can be updated, to parse out data corresponding to the path syntax expression used in input parameters of the subtask instances.

Subtasks in a workflow may be roughly divided into subtasks of a signal callback type and subtasks of a non-signal callback type. The subtasks of the signal callback type refer to time-consuming subtasks that need to interact with the outside (such as wait for a user operation, or call an interface of a third-party system to wait for an execution result of the third-party system). The subtasks of the non-signal callback type refer to subtasks executed locally by the execution node. Correspondingly, based on this, subtask instances may also be divided into subtask instances of the signal callback type and subtask instances of the non-signal callback type. The subtask instances of the signal callback type are subtask instances having an associated callback interface whose execution results are returned by an external system through the callback interface. The subtask instances of the non-signal callback type are subtask instances executed by the execution node. The subtask instances of the signal callback type need to wait for callback and parameter input by the external system before being considered completed.

During the sequential loading and execution of the subtask instances, if the computer device currently loads a target subtask instance of the signal callback type, according to a consumed subtask instance ID, the computer device queries the subtask instance table to acquire a corresponding subtask instance, and determines a subtask template used by the subtask instance, so as to determine whether the subtask instance is a subtask instance of the signal callback type. If yes, the computer device needs to interact with the outside (such as call an external third-party interface), and the target subtask instance can be woken up only after input parameters are obtained from the outside. Therefore, the computer device generates a callback interface corresponding to the target subtask instance. The callback interface may be externally invoked to input parameters. During the wait for calling, the computer device suspends loading and execution of the subtask instances of the task instance until the callback interface is invoked, and then resumes, from the target subtask instance according to the parameters externally inputted, loading and execution of the subtask instances of the task instance.

For example, if a parameter required to call the external third-party interface is an execution result A of a previous subtask instance, the computer device may generate, according to the execution result A of the previous subtask instance, a calling request for calling the third-party interface. The call request further carries the callback interface (or CallbackId) corresponding to the target subtask instance. In this way, after the call request is externally received, a third-party program is executed according to the execution result A and an execution result B is obtained, and then the execution result B is returned through the callback interface, thereby continuing to trigger resuming sequential loading and execution of subtask instances after the target subtask instance according to the execution result B.

In all embodiments, the computer device may assign a callback ID (CallbackId) to be associated with the target subtask instance, and parameters may be externally inputted to the target subtask instance through the callback interface assigned by the workflow engine system. The callback interface is, for example, http://xxx.com/v1/callback/signal/CallbackId. By externally calling the callback interface with a POST method, parameters may be inputted, and the entire task instance may be woken up to continue execution from the target subtask instance. For example, if a CallbackId generated by the workflow engine system for the target subtask instance is: 0f800765a0e01, the callback interface may be invoked in the following manner and the process is continued:
curl -d '{ "param": "value"}' http://xxx.com/v1/callback/signal/0f800765a0e01;
where curl denotes a command to request a webpage, which transmits a request with parameters by using -d. param denotes an inputted parameter name, and value denotes a parameter value.

In all embodiments, if the target subtask instance of the signal callback type is currently consumed from the subtask instance message queue and the corresponding callback interface is not generated for the target subtask instance, the callback interface corresponding to the target subtask instance is generated, a call of the callback interface is waited for, and the subtask instance ID corresponding to the target subtask instance is pushed to the subtask instance message queue again after the callback interface is invoked.

Specifically, when the computer device currently consumes a subtask instance ID from the subtask instance message queue, if a subtask instance corresponding to the subtask instance ID is a target subtask instance of the signal callback type and there is no callback interface associated with the target subtask instance (which may be determined according to a running status of the target subtask instance, if the running status is "Unprocessed", it indicates that a callback ID associated therewith has not yet been assigned), that is, the target subtask instance has not been assigned a corresponding callback ID, it indicates that the ID of the target subtask instance is consumed for the first time. In this case, the computer device assigns a unique callback ID to the target subtask instance, where the callback ID may be configured for generating a callback interface, waits for the callback interface to be externally invoked to input parameters to wake up the target subtask instance, and sets the running status of the target subtask instance to Being Processed during the wait.

When the subtask instance ID is consumed for the first time, since the corresponding subtask instance is a target subtask instance of the signal callback type and waits to be invoked after the corresponding callback interface is assigned, the target subtask instance is not actually loaded into the memory. Then, after the callback interface is externally invoked to input parameters, the computer device may push the ID of the target subtask instance to the subtask instance message queue again for secondary consumption by the distributed execution node, and then trigger a subsequent process to resume loading and execution of the target subtask instance.

In all embodiments, if the target subtask instance of the signal callback type is currently consumed from the subtask instance message queue and the corresponding callback interface has been generated for the target subtask instance, it is determined that the target subtask instance has been executed, execution data of the target subtask instance is updated according to an execution result received when the callback interface is invoked, and loading and execution of the subtask instances of the task instance are resumed after a subtask instance ID corresponding to a subtask instance pointed to by the target subtask instance is pushed to the subtask instance message queue.

Specifically, when the computer device currently consumes a subtask instance ID from the subtask instance message queue, if a subtask instance corresponding to the subtask instance ID is a target subtask instance of the signal callback type and the target subtask instance has been assigned an associated callback ID (which may be determined according to a running status of the target subtask instance, if the running status is "Being Processed", it indicates that a callback ID associated therewith has been assigned), it indicates that the ID of the target subtask instance is consumed for the second time, and execution of the target subtask instance is resumed by externally calling the callback interface. Moreover, since the target subtask instance is executed externally and a corresponding execution result is obtained, the computer device may update execution data of the target subtask instance in the database according to externally inputted parameters (execution results), set the running status of the target subtask instance to "Completed", acquire a subtask instance ID corresponding to a next subtask instance pointed to, push the subtask instance ID to the subtask instance message queue, and then continuously load and execute the subtask instances of the task instance.

In all embodiments, if a subtask instance of a non-signal callback type is currently consumed from the subtask instance message queue, the subtask instance may be loaded into the memory for execution. After the execution is completed, execution data and a running status of the subtask instance are updated. Then, a next subtask instance pointed to (through a NextAppInstIds parameter) is acquired, stored in the subtask instance table, and pushed to the subtask instance message queue, so as to be consumed by the distributed execution node and then loaded and executed according to a same logic.

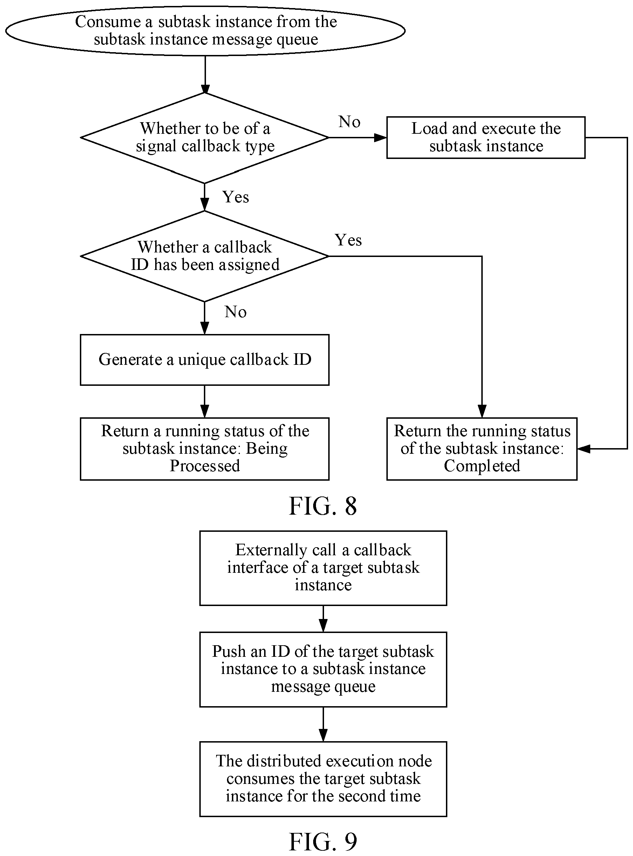

FIG. 8 is a schematic flowchart of execution of a subtask instance of a signal callback type according to an embodiment. Referring to FIG. 8, after a subtask instance ID is consumed from the subtask message queue, execution of a subtask instance corresponding to the subtask instance ID is triggered. If the subtask instance is a subtask instance of the non-signal callback type, the subtask instance may be directly executed. After the execution is completed, a running status of the subtask instance may be returned as Completed. If the subtask instance is a subtask instance of the signal callback type, it is further determined whether the subtask instance has been assigned an associated callback ID. If yes, it indicates that the subtask instance is consumed for the second time due to an external callback, and since parameters have been externally inputted through the callback interface, the computer device directly sets the running status of the subtask instance to Completed, and updates the execution data of the subtask instance in the database according to the parameters externally inputted. If not, it is determined that the subtask instance is consumed for the first time, and the computer device assigns a callback ID thereto, generates a callback interface, and waits for an external call, in which case the running status of the subtask instance is set to Being Processed.

FIG. 9 is a schematic flowchart of externally calling a callback interface according to an embodiment. Referring to FIG. 9, when the computer device receives an external call to the callback interface associated with the target subtask instance, the computer device pushes the ID of the target subtask instance again to the subtask instance message queue for secondary consumption by the distributed execution node, and then resumes loading and execution of the entire task instance from the target subtask instance.

According to the workflow processing method provided in this embodiment of this application, for each subtask instance of a task instance of a workflow, a data structure of the subtask instance is defined, the data structure includes a parameter field and a field of a subtask instance pointed to, and after an execution instruction of the workflow is triggered, a task instance of the workflow is generated, and the task instance is pushed to a task instance message queue and persistently stored in the task instance table of the database. At the same time, the distributed execution node may consume a task instance from the task instance message queue, obtain the first subtask instance of the consumed task instance, push the first subtask instance to the subtask instance message queue, and persistently store the first subtask instance in the subtask instance table of the database. Next is a process of executing a subtask instance, in which the subtask instance is executed and then execution data is stored in the database. If the acquired subtask instance is a subtask instance of the signal callback type, the computer device may assign a unique callback ID thereto, generate a callback interface according to the callback ID, and wait for an external call, in which case a running status of the subtask instance is set to Being Processed. If the acquired subtask instance is not a subtask instance of the signal callback type, the computer device directly loads the subtask instance into the memory for execution. After the execution is completed, the running status of the subtask instance is set to Completed. After the callback interface associated with the subtask instance is externally invoked, the subtask instance corresponding to the callback interface is woken up for continued execution. That is, the subtask instance is pushed to the subtask instance message queue again for secondary consumption by the distributed execution node, and then is continuously executed. In this way, the plurality of subtask instances of the task instance corresponding to the entire workflow are separated and sequentially loaded and executed, and when the plurality of subtask instances include a time-consuming subtask that needs to interact with the outside and is of the signal callback type, there is no need to load the entire task instance at a time and wait for execution of the time-consuming subtask to lead to long-time occupation of memory and consumption of running resources by the entire task instance, which can greatly improve utilization efficiency of the resources. According to such processing, the computer device updates the running status of the task instance to Completed in the task instance table of the database until all subtask instances of the entire task instance are executed.

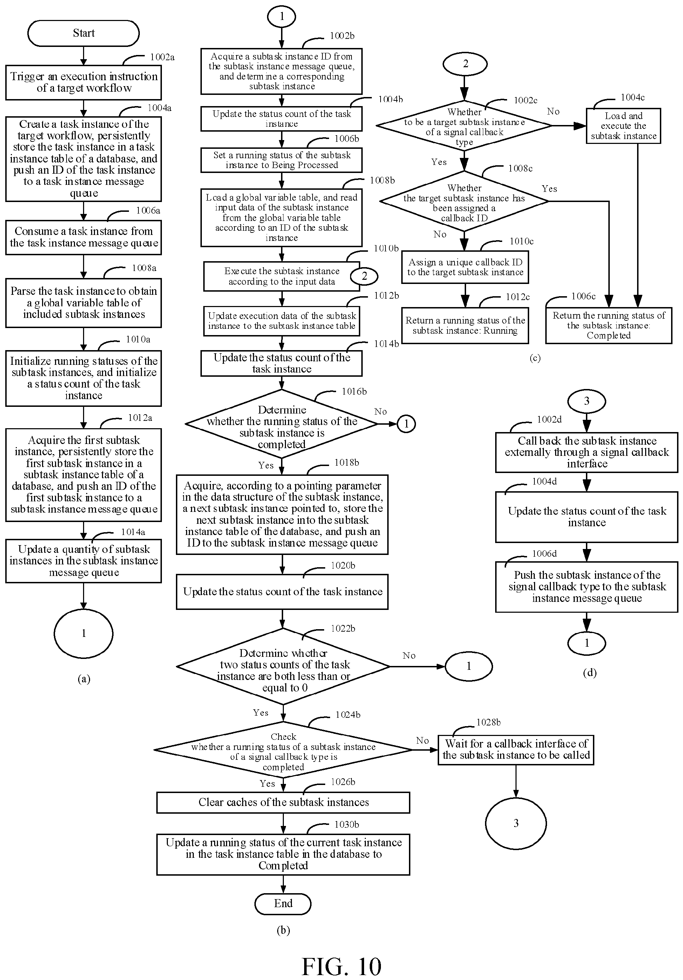

FIG. 10 is a schematic flowchart of a workflow processing method according to a specific embodiment. Referring to FIG. 10, the process includes 4 parts: acquiring a task instance, executing subtask instances, executing a subtask instance of a signal callback type, and externally calling a callback interface of the subtask instance of the signal callback type.

Refer to (a) in FIG. 10 which shows a process of acquiring a task instance, including the following operations:
Operation 1002a: Trigger an execution instruction of a target workflow.

The first subtask of the workflow is a trigger of the workflow. The trigger is a subtask that triggers execution of the workflow. According to different startup manners, triggers may be classified into different types, including webhook triggers, instruction triggers, and timed triggers. Detailed description of triggering manners of different triggers will be explained in detail later.

In the system shown in FIG. 1, the scheduling node may receive an execution instruction for the target workflow.

Operation 1004a: Create a task instance of the target workflow, persistently store the task instance in a task instance table of a database, and push an ID of the task instance to a task instance message queue.

Then, the scheduling node may query the database for a to-be-executed target workflow according to the target workflow ID carried in the execution instruction, after querying for the target workflow, create a task instance for the target workflow in the task instance table of the database according to fields included in the task instance table (including the task instance ID), and persistently store the task instance into the task instance table. At the same time, the scheduling node pushes the task instance ID of the task instance to the task instance message queue to allow the distributed execution node to consume the task instance ID therefrom and then execute the task instance.

Operation 1006a: Consume a task instance from the task instance message queue.

In the system as shown in FIG. 1, the distributed execution node may consume the task instance from the task instance message queue. Each distributed execution node monitors the task instance message queue. Once new task instance IDs exist in the message queue, the new task instance IDs may be sequentially consumed in a first-in first-out order and corresponding task instances may be executed.

Operation 1008a: Parse the task instance to obtain a global variable table of included subtask instances.

The execution node consuming the task instance, before starting to execute the first subtask of the task instance, may parse global variables of the subtask instances of the task instance, and form and store the global variable table. That is, the ID of each subtask instance and the corresponding global variables (including global input variables and global output variables) are correspondingly stored. Each time a subtask instance is loaded and executed and execution data is obtained, the global variable table is updated according to the execution data. Before a subtask instance pointed to by a previous executed subtask instance is executed, a previously updated global variable table is loaded into the memory. According to an ID of the subtask instance pointed to, the global variable table is read, and input data corresponding to a global input variable of the subtask instance is read. Next, the subtask instance may be executed according to the input data.

Operation 1010a: Initialize running statuses of the subtask instances, and initialize a status count of the task instance.

The running statuses of the subtask instances include Unprocessed, Being Processed, Completed, and Error, and the status count of the task instance includes the following 2 counts: a quantity of subtask instances of a current task instance in the subtask instance message queue, denoted as in_queue_count; and a quantity of subtask instances of the current task instance that are being executed, i.e., a quantity of subtask instances in the running status of "Being Processed", denoted as running_app_count. When the two counts are both less than or equal to 0, it indicates that all subtask instances of the current task instance have been executed.

In addition, after consuming the task instance, the execution node may determine each subtask instance included in the task instance based on a process data structure of the task instance, persist each subtask instance to the subtask instance table of the database before loading and executing the subtask instance, and initialize the running status of each subtask instance in the subtask instance table to To Be Processed.

Operation 1012a: Acquire the first subtask instance, persistently store the first subtask instance in a subtask instance table of a database, and push an ID of the first subtask instance to a subtask instance message queue.

The execution node obtains input data of the first subtask instance of the task instance according to the global variable table, acquires the first subtask instance, persists the first subtask instance into the subtask instance table, and at the same time, pushes the subtask instance App1 to the subtask instance message queue.

Operation 1014a: Update a quantity of subtask instances in the subtask instance message queue.

That is, in_queue_count+1.

Then, a process of executing a subtask instance is triggered, which, with reference to (b) in FIG. 10, includes the following operations:
Operation 1002b: Acquire a subtask instance ID from the subtask instance message queue, and determine a corresponding subtask instance.

Operation 1004b: Update the status count of the task instance.

Since a subtask instance is acquired from the subtask instance message queue and the subtask instance is started to be executed, the status count of the task instance is updated as follows:
in_queue_count-1; and running_app_count+1.

Operation 1006b: Set a running status of the subtask instance to Being Processed.

The execution node may set, in the subtask instance table of the database, the running status of the subtask instance to Being Processed.

Operation 1008b: Load a global variable table, and read input data of the subtask instance from the global variable table according to an ID of the subtask instance.

Operation 1010b: Execute the subtask instance according to the input data.

A process of executing the subtask instance may be obtained with reference to (c) in FIG. 10.

Operation 1012b: Update execution data of the subtask instance to the subtask instance table.

Operation 1014b: Update the status count of the task instance.

In this case, the subtask instance is either in a suspended state of waiting for external wake-up or in an execution completion state, and running_app_count-1 is set.

Operation 1016b: Determine whether the running status of the subtask instance is Completed, if yes, perform operation 1018b, and if not, return to operation 1002b. That is, the subtask instance is currently in a suspended state and is waiting for external wake-up before being pushed to the subtask instance message queue for the second time.

Operation 1018b: Acquire, according to a pointing parameter in the data structure of the subtask instance, a next subtask instance pointed to, store the next subtask instance into the subtask instance table of the database, and push an ID to the subtask instance message queue.

Operation 1020b: Update the status count of the task instance.

A quantity of subtask instances in the subtask instance message queue, i.e., in_queue_count+1, is updated.

Operation 1022b: Determine whether two status counts of the task instance are both less than or equal to 0, if not, indicate that there is still a subtask instance in a suspended state of waiting for external wake-up, return to operation 1002b to continue waiting for wake-up, and if yes, perform operation 1024b.

Operation 1024b: Check whether a running status of a subtask instance of a signal callback type is completed, if yes, perform operation 1026b, and if not, perform operation 1028b to wait for a callback interface of the subtask instance to be invoked. That is, referring to Part (d) in FIG. 10, the subtask instance is woken up for continued execution after the wait for the callback interface of the subtask instance to be invoked.

When the two status counts are both less than or equal to 0, it indicates that there are no subtask instances of the task instance in the subtask instance message queue and there are no running subtask instances, and there may be a situation where the final subtask instance of the signal callback type has not been woken up and is being processed, so a wait for wake-up continues.

Operation 1026b: Clear caches of the subtask instances.

Operation 1030b: Update a running status of the current task instance in the task instance table in the database to Completed, and end the execution process of the current task instance.

Referring to (c) in FIG. 10, a process of executing a subtask instance includes the following operations:
Operation 1002c: Determine whether the current subtask instance is a target subtask instance of a signal callback type. If not, operation 1004c is performed to directly load and execute the subtask instance, and then operation 1006c is performed. If yes, operation 1008c is performed.

The execution node, after consuming a subtask instance ID from the subtask instance message queue, may query the subtask instance table for a subtask instance corresponding to the subtask instance ID, and fields of the subtask instance include a subtask type, so that it can be determined whether the subtask instance is a target subtask instance of the signal callback type.

Operation 1008c: Determine whether the target subtask instance has been assigned a callback ID. If not, operation 1010c is performed. If yes, operation 1006c is performed.

The execution node determines whether there is a callback ID associated with the target subtask instance. If the callback ID exists, it indicates that the callback ID has been assigned to the target subtask instance.

Operation 1010c: Assign a unique callback ID to the target subtask instance to wait for a call of the callback interface generated based on the callback ID.

Operation 1012c: Set a running status of the target subtask instance to Being Processed.

The execution node may updatethe running status of the target subtask instance in the subtask instance table of the database to Being Processed.

Referring to (d) in FIG. 10, a process of calling back a subtask instance includes the following operations:
Operation 1002d: Call back the subtask instance externally through a signal callback interface.

Operation 1004d: Update the status count of the task instance.

The execution node updates a quantity of subtask instances in the subtask instance message queue, i.e., in_queue_count+1.

Operation 1006d: Push the subtask instance of the signal callback type to the subtask instance message queue, and return to operation 1002b.

The execution node pushes the subtask instance ID corresponding to the subtask instance of the signal callback type to the subtask instance message queue for the second time, and the distributed execution node, when monitoring that the subtask instance ID exists in the message queue, consumes the subtask instance ID from the message queue. That is, the subtask instance is consumed for the second time, and then operation 1002b is performed.

For example, the task instance of the target workflow includes three subtask instances App1, App2, and App3, the pointing relationship is that App1 points to App2 and App2 points to App3, App2 is a subtask instance of the signal callback type, and App1 and App3 are subtask instances of the non-signal callback type. Then, a processing flow of the task instance is as follows:
Firstly, an execution instruction for the target workflow is triggered, a corresponding task instance is created in response to the execution instruction, the task instance is persistently stored in the task instance table of the database, the running status is initialized to Unprocessed, the status counts in_queue_count and running_app_count are both initialized to 0, and at the same time, an ID of the task instance is pushed to the task instance message queue. Then, the distributed execution node, after consuming a task instance from the task message queue, may update the running status of the task instance to Being Processed. Next, the distributed execution node acquires, according to the ID of the consumed task instance, and parses the corresponding task instance, obtains global variable tables of the included subtask instances, obtains input data of the first subtask instance of the task instance, and acquires the first subtask instance App1 which is persistently stored into the subtask instance table and in a status of Unprocessed, pushes the subtask instance App1 to the subtask instance message queue, and updates in_queue_count+1.

Next, the execution node consumes the subtask instance App1, updates in_queue_count-1 and running_app_count+1, and at the same time, sets a status of App1 in the subtask instance table to Being Processed. Next, App1 is executed according to input data of App1, and if it is determined that App1 is not of the signal callback type, App1 is directly loaded into the memory for execution. After the execution is completed, the running status of App1 is updated to Completed and execution data is stored into the database. At the same time, running_app_count-1 is updated. If it is checked that the running status of App1 is Completed, a next subtask instance App2 pointed to by App1 is acquired.

Similarly, App2 is persistently stored in the subtask instance table, the running status is initialized to Unprocessed, the subtask instance App2 is pushed to the subtask instance message queue, and in_queue_count+1 is updated. If it is checked that the two status counts in_queue_count and running_app_countof the task instanceare not both less than or equal to 0, App2 is continuously consumed from the subtask instance message queue, in_queue_count-1 and running_app_count+1 are updated, and at the same time, the status of App2 in the subtask instance table is set to Being Processed. Next, the global variable table is updated according to execution data of App1, the updated global variable table is loaded into the memory, input data of App2 is read, and App2 is executed according to the input data of App2: if it is determined that App2 is of the signal callback type and a callback ID has not yet been assigned thereto, after a unique callback ID is assigned thereto, the running status of App2 is set to Being Processed, and at the same time, running_app_count-1 is updated; and it is then determined whether the running status of App2 is Completed, and if not, a wait for wake-up through the callback interface of App2 is continued. After the callback interface of App2 is invoked, App2 is pushed against to the subtask instance message queue, and at the same time, in_queue_count+1 is updated. In this case, the execution node may consume App2 from the subtask instance message queue, update in_queue_count-1 and running_app_count+1 again, directly set the running status to Completed because App2 has been assigned a callback ID, store execution data of App2 into the database based on externally inputted parameters, and update running_app_count-1. Finally, if it is checked that the running status of App2 is Completed, a next subtask instance App3 pointed to by App2 is acquired.

Similarly, App3 is persistently stored in the subtask instance table, the running status is initialized to Unprocessed, the subtask instance App3 is pushed to the subtask instance message queue, and in_queue_count+1 is updated. The execution node consumes the subtask instance App3, and updates in_queue_count-1 and running_app_count+1; and at the same time, sets a status of App3 in the subtask instance table to Being Processed. Next, App1 is executed according to input data of App3, and if it is determined that App3 is not of the signal callback type, App3 is directly loaded into the memory for execution. After the execution is completed, the running status of App3 is updated to Completed and execution data is stored into the database. At the same time, running_app_count-1 is updated. If it is checked that the running status of App3 is Completed and there is no next subtask instance, in which case both in_queue_count and running_app_count are 0 and there is no running subtask instance of the signal callback type, execution of the entire task instance ends, and the running status of the task instance is updated to Completed.

The following describes in detail how to trigger an execution instruction of a workflow.

The first subtask of the workflow is a trigger of the workflow. The trigger is a starting node of the workflow. Triggers may be classified into different types according to different triggering manners, i.e., different startup manners of the workflow, including webhook triggers, instruction triggers, and timed triggers. When different triggers are used as the starting node of the workflow, execution of the workflow may be triggered in different manners.

In all embodiments, the above workflow processing method further includes: if the first subtask of the target workflow is a webhook trigger, triggering the execution instruction for the target workflow when a network request initiated to a trigger address of the target workflow is received; where the trigger address of the target workflow is generated, when the target workflow is created, according to a token assigned to the webhook trigger in a case that the webhook trigger is used as the first subtask of the target workflow.

Specifically, if the first subtask uses the webhook trigger when the target workflow is created, the workflow engine may automatically generate a unique trigger address for the workflow, and an execution instruction of the workflow may be triggered through the trigger address. The unique trigger address may be generated according to a unique token request interface. For example, the assigned token is 12345678. The token may be a hash value of an ID of the workflow. Then the corresponding trigger address of the workflow is:
http://api.workflow.woa.com/v1/workflow/webhook/12345678.

The trigger address is in one-to-one correspondence to the workflow. When a terminal or server initiates a network request to the trigger address, the workflow engine system may receive the network request and acquire the corresponding workflow for execution.

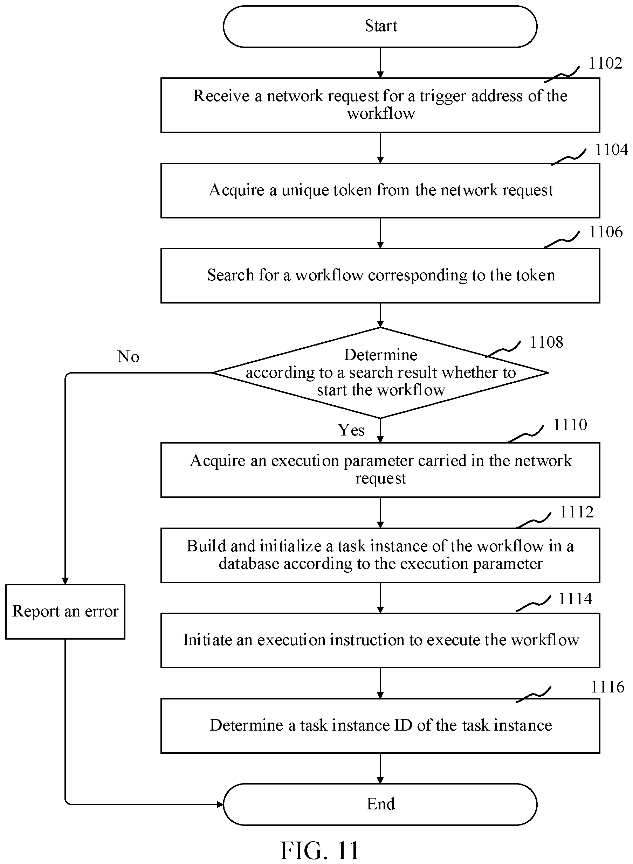

FIG. 11 is a schematic flowchart of triggering an execution instruction of a workflow through a webhook trigger according to an embodiment. Referring to FIG. 11, the computer device in the workflow engine system, such as the scheduling node or any execution node in FIG. 1, may trigger execution of the workflow as follows:
Operation 1102: Receive a network request for a trigger address of the workflow.

Operation 1104: Acquire a unique token from the network request.

The token generated is different each time a trigger of a webhook type is created.

Operation 1106: Search for a workflow corresponding to the token.

Operation 1108: Determine according to a search result whether to start the workflow, and if the workflow can be found, start execution of the found workflow, and perform operation 1110. If the workflow corresponding to the token cannot be found, an error may be reported, and execution of the workflow cannot be started.

Operation 1110: Acquire an execution parameter carried in the network request.

Operation 1112: Build and initialize a task instance of the workflow in a database according to the execution parameter.

Operation 1114: Initiate an execution instruction to execute the workflow.

Operation 1116: Determine a task instance ID of the task instance.

After the task instance ID is determined, the task instance ID may be pushed to the task instance message queue, which is monitored by the distributed execution node and is consumed before execution of the corresponding task instance.

In the above embodiments, the webhook trigger is used as a manner of starting execution of a workflow, which may be adapted to scenarios where any system, such as a third party, triggers the execution of the workflow, improving utilization of execution resources of the workflow engine.

In all embodiments, the workflow processing method further includes: if the first subtask of the target workflow is an instruction trigger, triggering the execution instruction for the target workflow when a trigger instruction for the target workflow transmitted by a target application is received through an instruction callback interface; where the trigger instruction for the target workflow is configured, when the target workflow is created, for the instruction trigger in a case that the instruction trigger is used as the first subtask of the target workflow.

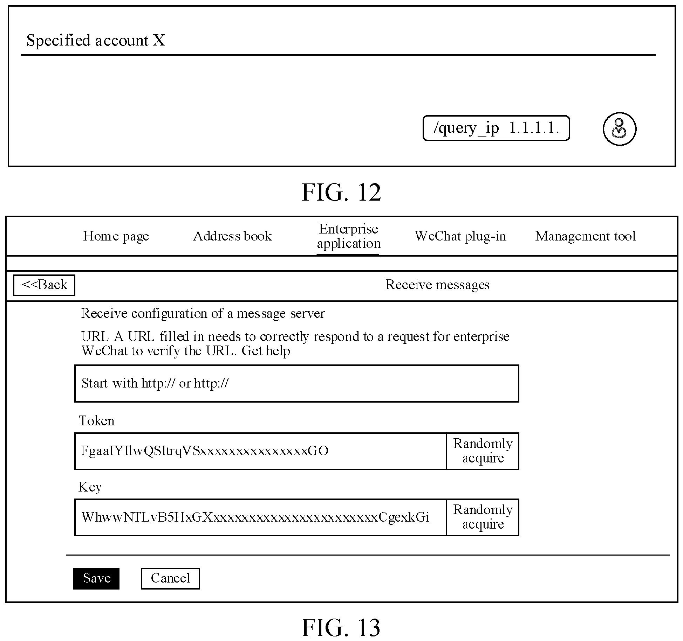

The instruction trigger transmits a message of a trigger instruction (the trigger instruction is in one-to-one correspondence to the target workflow) to a specified object, which may trigger execution of the workflow that uses the instruction trigger as the first subtask. The specified object may be a specified account belonging to the target application. When the user (or authorized user) transmits a trigger instruction corresponding to the target workflow to the specified account, execution of the target workflow may be triggered. The target application may be an instant messaging application. The specified account may be a customer service account serving the workflow engine system. The trigger instruction may further carry an execution parameter. FIG. 12 is a schematic diagram of an interface for transmitting a trigger instruction to a specified account according to an embodiment. Referring to FIG. 12, the trigger instruction includes a trigger instruction/query_ip corresponding to the target workflow and an execution parameter 1.1.1.1.

The instruction trigger needs to be implemented through the following operations:

Firstly, there is a need to register an account in the target application and point a callback address of the account to an instruction callback interface of the workflow engine. Then, any message received by the account may be forwarded to the instruction callback interface through the target application. For example, http://api.workflow.csop.woa.com/v1/callback/wxwork.

Next, after the registration of the account, the target application may assign a token and a credential EncodingAESKey to the account, and the target application uses the token and the credential to encrypt a message received by the account, and then return the encrypted message to the instruction callback interface of the workflow engine, which ensures security of transmission. FIG. 13 is a schematic diagram of an interface for configuring a specified account according to an embodiment.

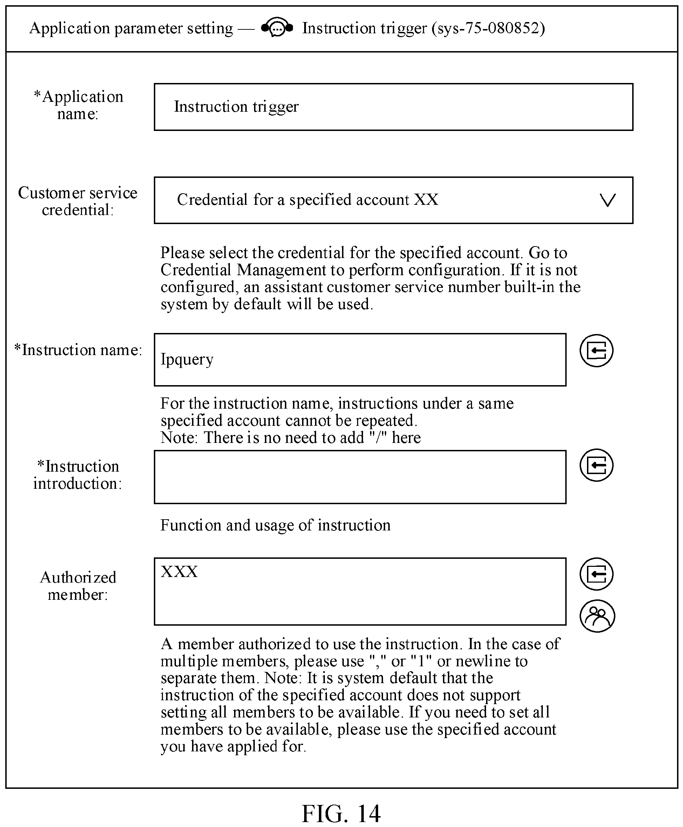

Next, the instruction trigger is configured for the workflow. FIG. 14 is a schematic diagram of an interface for configuring an instruction trigger according to an embodiment. Referring to FIG. 14, when creating a workflow on the front-end webpage, the developer or service personnel may select an instruction trigger as a starting node and create a trigger instruction for the instruction trigger. An account credential is a credential of the specified account registered at the target application. An instruction name is a specific trigger instruction, for example, query_ip. Each instruction name is unique, and each instruction is in one-to-one correspondence to the current workflow. In addition, the trigger instruction may be authorized to some accounts. Only the authorized accounts can view the trigger instruction. Execution of the workflow may be triggered by transmitting the trigger instruction to the specified account. An instruction introduction may be filled in to introduce functions and usage of the instruction.

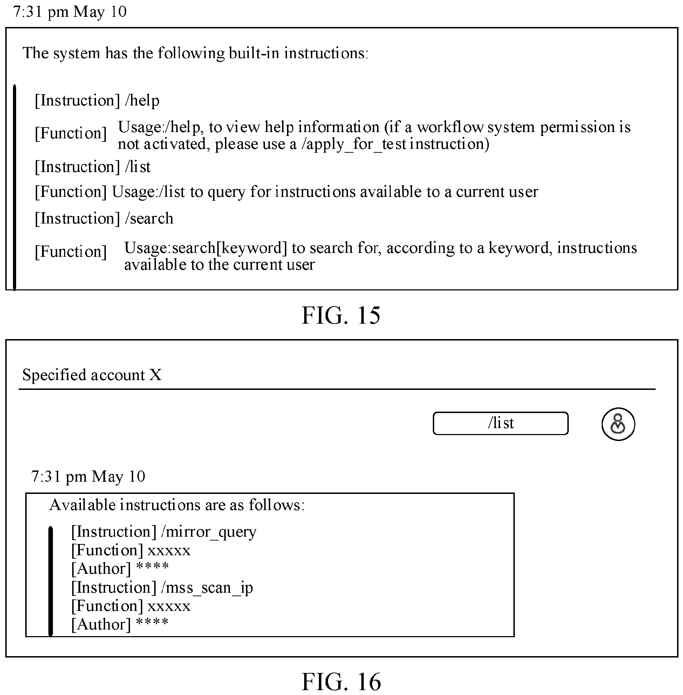

The target application may also support transmitting a system instruction to the specified account to view instructions available to the current account. FIG. 15 is a schematic diagram of a system instruction according to an embodiment, including a /help instruction configured for viewing help information; a /list instruction configured for viewing instructions for which the current account has permissions; and a /search instruction configured for searching for, according to a keyword, instructions available to the current account.

FIG. 16 is a schematic diagram of an interface for viewing a permission instruction according to an embodiment. Referring to FIG. 16, the current account transmits /list to the specified account, a trigger instruction for which the current account has permissions as well as a function introduction of the trigger instruction may be returned.

In all embodiments, the triggering the execution instruction for the target workflow when a trigger instruction for the target workflow transmitted by a target application is received through an instruction callback interface includes: after the target application logged in with a first account receives a session message transmitted by a second account, receiving, through the instruction callback interface, the session message forwarded by the target application; acquiring a trigger instruction and an execution parameter from the session message; determining a target workflow corresponding to the trigger instruction; and triggering an execution instruction for the target workflow according to the execution parameter; where when registered, the first account is configured to forward the received session message to the instruction callback interface.

In all embodiments, before the triggering an execution instruction for the target workflow according to the execution parameter, the method further includes: verifying whether the second account transmitting the session message has an execution permission for the trigger instruction; and triggering the execution instruction for the target workflow according to the execution parameter when the verification is passed; where an authorized account with the execution permission for the trigger instruction is configured, when the target workflow is created, for the instruction trigger in a case that the instruction trigger is used as the first subtask of the target workflow.

In a specific embodiment, any account that attempts to trigger the execution of the target workflow, such as a second account, may transmit a session message to the first account (i.e., the specified account), the target application encrypts and signs the session message, and forwards the encrypted and signed session message to the instruction callback interface of the workflow engine, and the instruction callback interface of the workflow engine performs decryption through the token and EncodingAESKey assigned when the specified account is registered, and acquires a plaintext trigger instruction which may further include an execution parameter. Next, according to the one-to-one correspondence between trigger instructions and workflows, it is queried whether there is a workflow corresponding to the trigger instruction. If yes, an authorized member of the trigger instruction is acquired according to the instruction trigger of the workflow. If the current account is the authorized member, the execution parameter in the trigger instruction is passed to the workflow and the corresponding task instance is created and executed, and an execution result is returned to the current account.

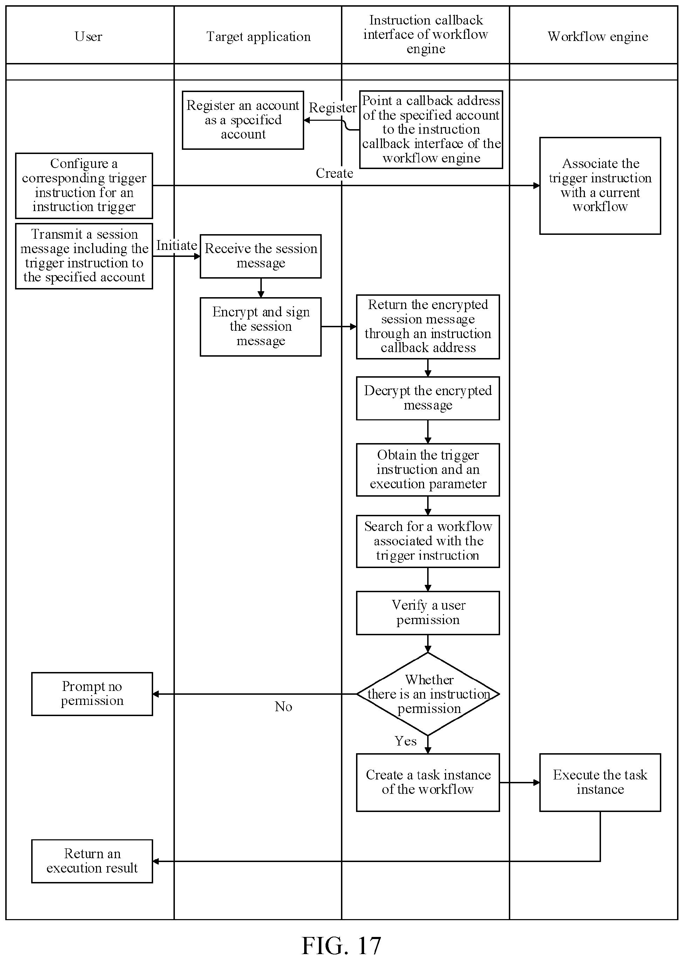

FIG. 17 is a schematic flowchart of triggering execution of a workflow through an instruction trigger according to an embodiment. Referring to FIG. 17, the flowchart mainly involves the following roles: a user, a target application, an instruction callback interface of a workflow engine, and a workflow engine that need to trigger execution of the workflow through an instruction trigger. Firstly, the user registers an account through Enterprise WeChat as a specified account, and points a callback address of the specified account to the instruction callback interface of the workflow engine. Next, when the user creates a workflow in the front-end webpage of the workflow engine, the user configures a corresponding trigger instruction for the instruction trigger and associates the trigger instruction with the current workflow. When any user transmits a session message including a trigger instruction to the specified account through the current account, the target application encrypts and signs the session message and forwards the session message to the instruction callback interface of the workflow engine. The instruction callback interface uses a token and a credential of the specified account to decrypt the encrypted message and obtain the trigger instruction and an execution parameter. The instruction callback interface then searches for a workflow associated with the trigger instruction and verifies an instruction permission of the current account. If the permission exists, a task instance of the workflow is created and is pushed to the workflow engine to execute the workflow, and an execution result is returned to the current account. If the permission does not exist, prompt information indicating no permission is returned to the current account.

In the above embodiments, through the instruction trigger, execution of the workflow can be easily triggered through the target application at any time, which is suitable for scenarios where the user triggers the execution of the workflow and improves utilization of execution resources of the workflow engine.

In all embodiments, the method further includes: if the first subtask of the target workflow is a timed trigger, triggering the execution instruction for the target workflow when a trigger time configured for the target workflow is met; where the trigger time for the target workflow is configured, when the target workflow is created, for the timed trigger in a case that the timed trigger is used as the first subtask of the target workflow.

The timed trigger is a manner of triggering timed startup of execution of a workflow. By configuring a running cycle or specified time of the workflow for the timed trigger, execution of the workflow may be automatically triggered when the set cycle or specified time is met. The trigger time configured for the timed trigger may include seconds (0-59), minutes (0-59), hours (0-23), date (day of a month), month (0-11), and week (day of a week). If the configured trigger time is "0*/10****", the workflow may be triggered and executed every 10 hours.

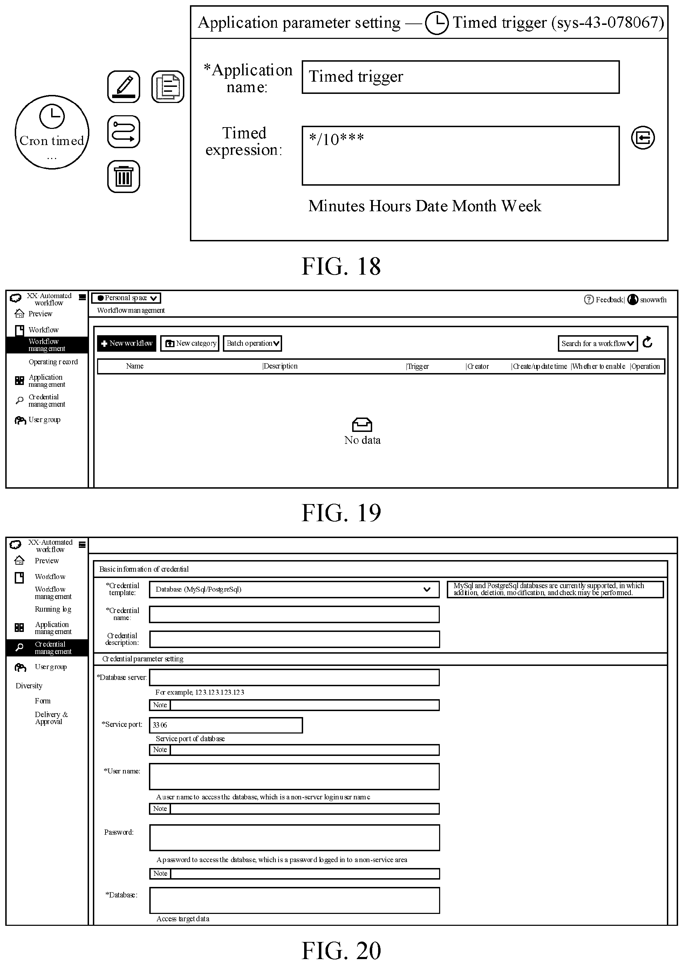

FIG. 18 is a schematic diagram of an interface for configuring a timed trigger according to an embodiment. Referring to FIG. 18, when creating a workflow on the front-end webpage, the developer or service personnel may select a timed trigger as a starting node and create a trigger time for the timed trigger. After the workflow is created, when the trigger time is met, execution of the current workflow may be automatically triggered.

In this embodiment, through the timed trigger, the execution of the workflow can be easily triggered in a timed manner, which is suitable for scenarios where workflows are executed through timed triggering.

Next, the front-end webpage of the workflow engine system is introduced. The front-end webpage of the workflow engine provides the developer or service personnel with functions of workflow management, credential management, and workflow execution record management. The workflow management is mainly configured for operations such as workflow creation, edition, deletion, and startup. The credential management is mainly configured for managing sensitive information such as account passwords that need to be used in some subtasks. For subtasks that require access to data, database credentials are generally required to access the database normally. The execution record management is mainly configured for recording historical records of workflow execution.

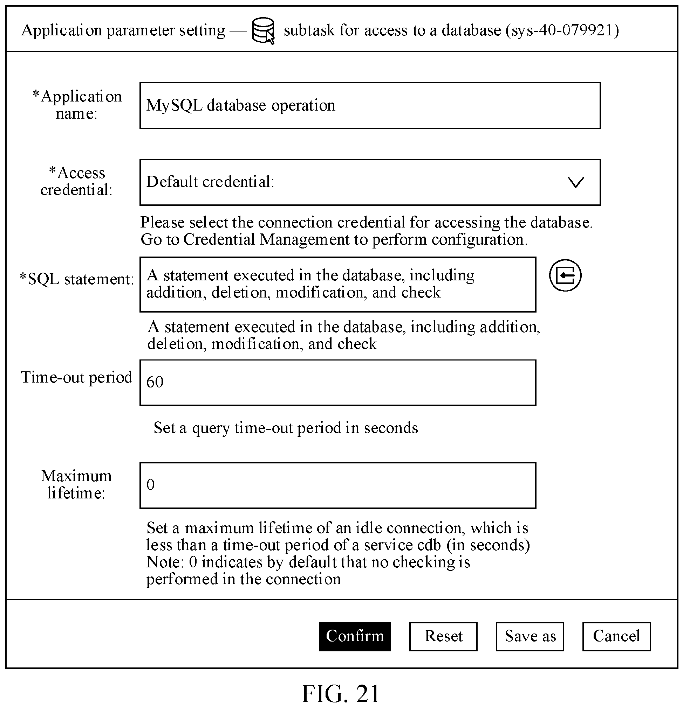

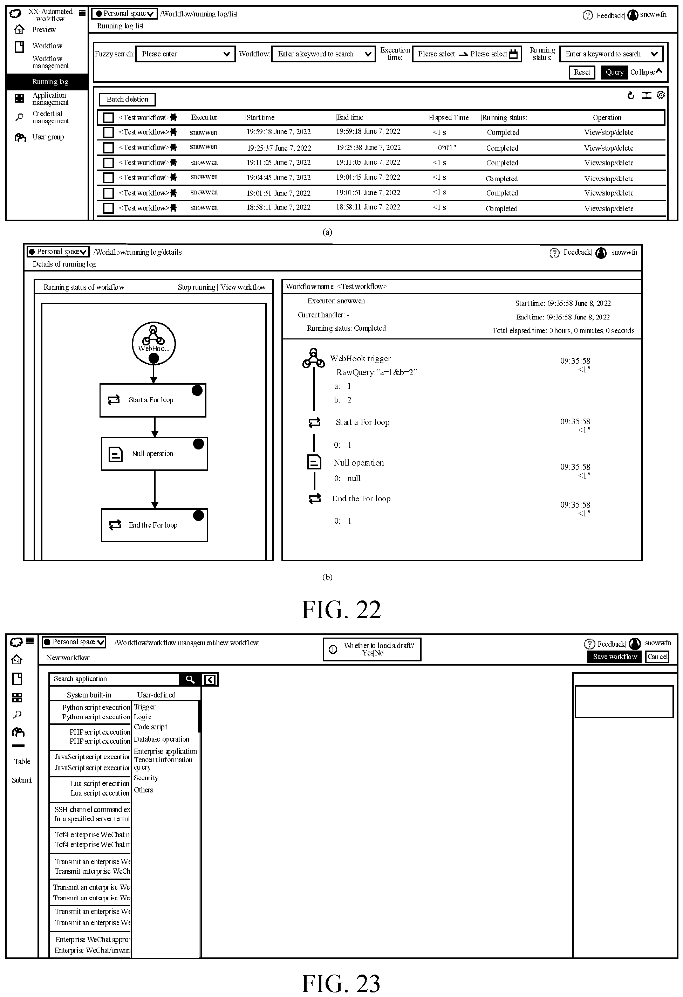

FIG. 19 is a schematic diagram of a web interface of a workflow engine system according to an embodiment. Referring to FIG. 19 which shows a main interface of a workflow engine webpage. The main interface mainly includes 3 major modules, which are workflow management, credential management, and execution record management respectively. FIG. 20 is a schematic diagram of an interface of credential management according to an embodiment. Referring to FIG. 20, some subtasks require use of credential information. For example, a subtask of operating MySQL requires use of a database credential to ensure security of the database. Then, the developer needs to first go to credential management to create information credentials such as database-related account passwords. FIG. 21 is a schematic diagram of an interface for configuring a subtask that needs to access a database according to an embodiment. Referring to FIG. 21, the subtask is a subtask for operating the database. On a configuration interface of the subtask, a corresponding access credential needs to be configured. FIG. 22 is a schematic interface diagram of a workflow execution record management interface according to an embodiment. Referring to (a) in FIG. 22, historical records of workflow execution may be queried on an execution record page. Details of historical execution records may be viewed by clicking a view button of execution records, as shown in (b) in FIG. 22.

FIG. 23 is a schematic diagram of an interface for creating a workflow editor according to an embodiment. Referring to FIG. 23, on the left are common subtasks which are mainly classified into 3 categories:
I: Subtasks serving as triggers, which mainly serve as starting nodes of a workflow. Different triggers may implement different startup manners, commonly including webhook triggers, instruction triggers, and timed triggers.
II: Logical subtasks, which mainly include subtasks involving process relationships, such as a subtask starting a For loop and a subtask ending a For loop.
III: Service subtasks, which mainly implement some common service operations.

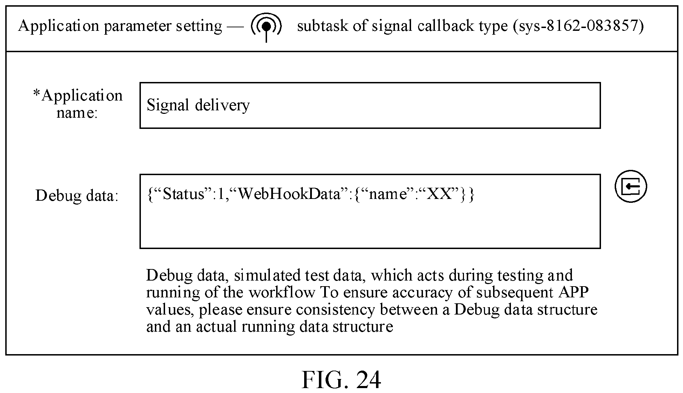

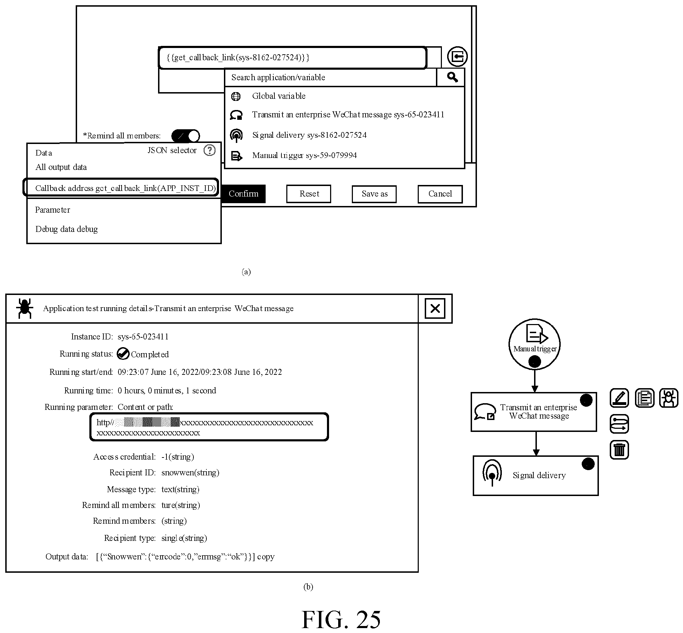

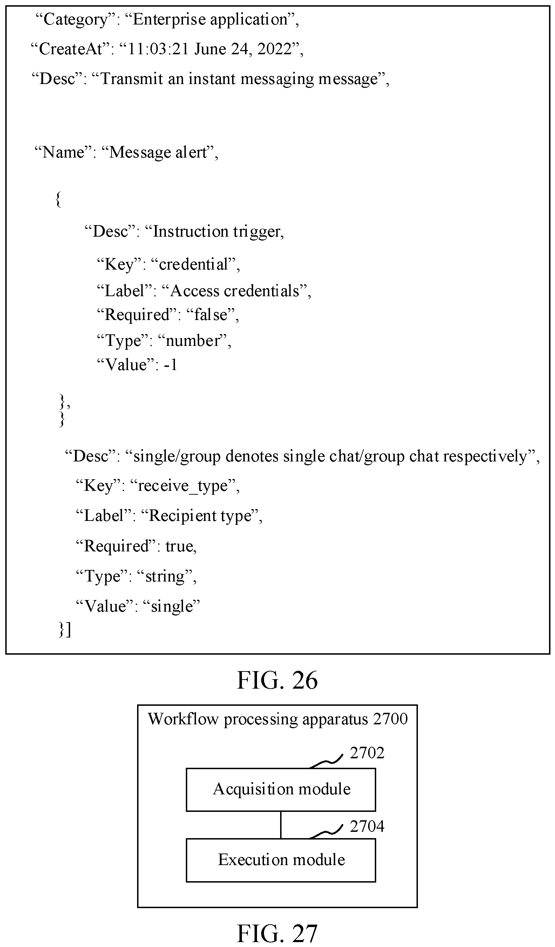

After a subtask is dragged into the editor, the user may double-click the subtask, and a parameter configuration interface for the subtask may be displayed on the front-end webpage, as shown in FIG. 24 which shows a parameter configuration interface for a subtask of a signal callback type according to an embodiment. For the subtask of the signal callback type, if a callback interface for the subtask is to be generated, a variable expression may be generated and dynamically acquired through a visual parameter selector. FIG. 25 is a schematic diagram of generating a callback interface according to an embodiment. (a) in FIG. 25 is a schematic diagram of acquiring a callback interface of a subtask instance of a signal callback type according to an embodiment. (b) in FIG. 25 is a schematic diagram of a callback interface dynamically acquired during execution of a workflow. A unique callback address may be generated during each execution for an external call. FIG. 26 is a schematic diagram of a process data structure of a workflow according to an embodiment. Referring to FIG. 26, a corresponding process data structure is generated for a created workflow "Transmit an Instant Messaging Message" in the visual editor, which, as can be seen, includes 2 subtasks. One is a trigger, and the other is transmitting a message.

In a specific embodiment, the workflow processing method is applicable to a backend computer device in the workflow engine system, such as a scheduling node or a distributed execution node. The method may specifically include the following operations:
1. When the target workflow is created, a token is assigned to a webhook trigger if the webhook trigger is used as the first subtask of the target workflow, a trigger address of the target workflow is generated according to the token, and the created workflow is stored in the database. An execution instruction for the target workflow is triggered when a network request initiated to the trigger address of the target workflow is received.
2. When the target workflow is created, a trigger instruction of the target workflow is configured for an instruction trigger if the instruction trigger is used as the first subtask of the target workflow. At the same time, a first account belonging to the target application is configured as a specified account that forwards a received session message to an instruction callback interface of the computer device. Afterwards, the created target workflow is stored in the database. After the target application logged in with a first account receives a session message transmitted by a second account, the session message forwarded by the target application is received through the instruction callback interface, and the computer device acquires a trigger instruction and an execution parameter from the session message, determines a target workflow corresponding to the trigger instruction, verifies whether the second account transmitting the session message has an execution permission for the trigger instruction, and triggers an execution instruction for the target workflow according to the execution parameter when the verification is passed.
3. When the target workflow is created, a trigger time of the target workflow is configured for a timed trigger if the timed trigger is used as the first subtask of the target workflow, and the created workflow is stored in the database. The execution instruction for the target workflow is triggered when the trigger time configured for the target workflow is met.
4. When the execution instruction for the target workflow is triggered, the computer device creates a task instance corresponding to the target workflow in the task instance table of the database, and pushes a task instance ID of the created task instance to the task instance message queue, to allow the distributed execution node monitoring the message queue to consume a task instance ID from the task instance message queue; and determines a to-be-executed task instance according to the task instance ID.
5. A subtask instance ID corresponding to the first subtask instance of the task instance is pushed to the subtask instance message queue, to allow the distributed execution node monitoring the message queue to consume a subtask instance ID from the subtask instance message queue, the current subtask instance is loaded and executed according to the subtask instance ID, after the current subtask instance is executed, a subtask instance pointed to by the current subtask instance is determined, a subtask instance ID corresponding to the subtask instance pointed to is pushed to the subtask instance message queue, and the process returns to the operation of consuming a subtask instance ID from the subtask instance message queue until the subtask instances of the task instance are all executed.
6. If a subtask instance of a non-signal callback type is currently consumed from the subtask instance message queue, the subtask instance is directly loaded and executed, execution data is obtained, the execution data of the subtask instance is updated to the database, and after a subtask instance ID corresponding to a subtask instance pointed to by the subtask instance is pushed to the subtask instance message queue, execution of the subtask instance pointed to is started.
7. If a target subtask instance of a signal callback type is currently consumed from the subtask instance message queue and a corresponding callback interface is not generated for the target subtask instance, the callback interface corresponding to the target subtask instance is generated, a call of the callback interface is waited for, and the subtask instance ID corresponding to the target subtask instance is pushed to the subtask instance message queue again after the callback interface is invoked.
8. If a target subtask instance of the signal callback type is currently consumed from the subtask instance message queue and a corresponding callback interface has been generated for the target subtask instance, it is determined that the target subtask instance has been executed, execution data of the target subtask instance is updated according to an execution result received when the callback interface is invoked, and loading and execution of the subtask instances of the task instance are resumed after a subtask instance ID corresponding to a subtask instance pointed to by the target subtask instance is pushed to the subtask instance message queue.

The workflow processing method provided in this embodiment of this application provides a method that may interrupt and resume a task instance executing a workflow. The workflow engine implemented through the method can solve the problem of time-consuming system interaction with a third-party system (an external system) and long-time running and waiting in memory. After a callback interface is generated for a subtask instance of a signal callback type in a manner of generating a callback address, the entire task instance enters a suspended state and may not wait in the memory to occupy and consume resources, and the task instance is woken up to continue execution from the subtask instance of the signal callback type until the callback interface is externally invoked. In this way, the problem of time-consuming interaction with the third-party system and long-time occupation of memory and CPU resources can be well solved, greatly improving utilization of resources.

Although the operations are displayed sequentially according to the instructions of the arrows in the flowcharts of the embodiments, these operations are not necessarily performed sequentially according to the sequence instructed by the arrows. Unless otherwise explicitly specified in this application, execution of the operations is not strictly limited, and the operations may be performed in other sequences. Moreover, at least some of the operations in the flowcharts of the embodiments may include a plurality of operations or a plurality of stages. The operations or stages are not necessarily performed at the same moment but may be performed at different moments. Execution of the operations or stages is not necessarily sequentially performed, but may be performed in turn or alternately with other operations or at least some of operations or stages of other operations.

Based on the same inventive concept, an embodiment of this application further provides a workflow processing apparatus configured to implement the foregoing workflow processing method. The implementation provided by the apparatus to solve the problem is similar to the implementation described in the above method. Therefore, specific limitations in the embodiments of one or more workflow processing apparatus provided below may be obtained with reference to the limitations on the workflow processing method above.

In all embodiments, as shown in FIG. 27, a workflow processing apparatus 2700 is provided, including: an acquisition module 2702 and an execution module 2704.

The acquisition module 2702 is configured to acquire a to-be-executed task instance corresponding to a target workflow.

The execution module 2704 is configured to determine a pointing relationship between a plurality of subtask instances of the task instance according to a process data structure of the task instance, and sequentially load and execute, starting with the first subtask instance of the task instance, the subtask instances according to the pointing relationship.

The execution module 2704 is further configured to generate, if a target subtask instance indicating a signal callback subtask is currently loaded, a callback interface for effecting a callback of the target subtask instance, and suspend loading and execution of the subtask instances of the task instance; and resume, from the target subtask instance, loading and execution of the subtask instances of the task instance after the callback interface corresponding to the target subtask instance is invoked.

In the above workflow processing apparatus 2700, an execution mechanism based on subtask levels in a workflow is proposed: A plurality of subtask instances of a task instance corresponding to the entire workflow are separated and sequentially loaded and executed. When a target subtask instance that needs to interact with the outside and is of a signal callback type is loaded, loading and execution of the subtask instances of the task instance are suspended by generating a callback interface corresponding to the target subtask instance, and the entire task instance is dormant. Until the callback interface is invoked, loading and execution of the subtask instances of the task instance are resumed from the target subtask instance, and the task instance is continuously executed. Under this mechanism, during the wait for a call of the callback interface, since the loading of the subtask instances of the task instance is suspended, the task instance may not occupy memory and running resources, which can greatly improve utilization efficiency of the resources compared with the execution mechanism based on workflow levels, that is, the entire task instance is loaded at a time and execution of the time-consuming subtask is waited for to lead to long-time occupation of memory and consumption of running resources by the entire task instance.

Each module in the above workflow processing apparatus may be implemented entirely or partially by software, hardware, or a combination thereof. The foregoing modules may be built in or independent of a processor of a computer device in a form of hardware, or may be stored in a memory of the computer device in a form of software, so that the processor invokes and performs an operation corresponding to each of the foregoing modules. Specific limitations on the modules in the above workflow processing apparatus may be obtained with reference to the limitations on the workflow processing method above.

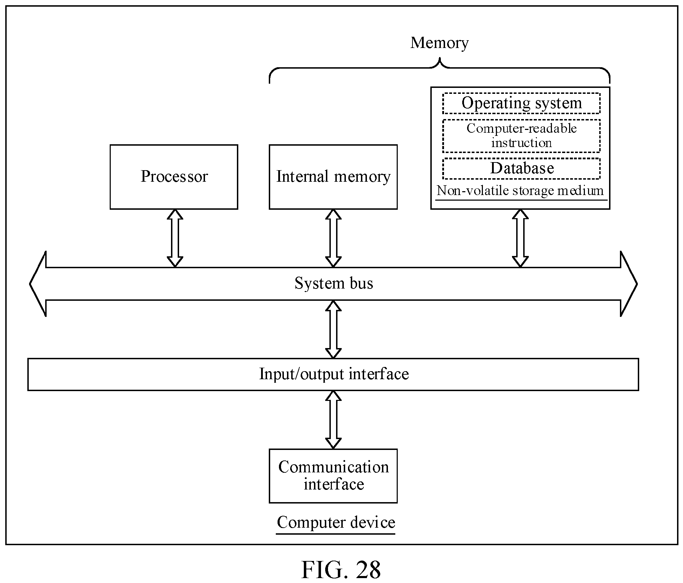

In all embodiments, a computer device is provided. The computer device may be the web service node 121, the scheduling node 122, or the distributed execution node 123 in the distributed cluster 120 shown in FIG. 1. An internal structure diagram of the computer device may be shown in FIG. 28. The computer device includes a processor, a memory, an input/output (I/O) interface, and a communication interface. The processor, the memory, and the I/O interface are connected through a system bus, and the communication interface is connected to the system bus through the I/O interface. The processor of the computer device is configured to provide computing and control capabilities. The memory of the computer device includes a non-volatile storage medium and an internal memory. The non-volatile storage medium stores an operating system, computer-readable instructions, and a database. The internal memory provides an environment for execution of the operating system and the computer-readable instructions in the non-volatile storage medium. The database of the computer device is configured to store workflow-related task instances and subtask instance data. The I/O interface of the computer device is configured to exchange information between the processor and an external device. The communication interface of the computer device is configured to connect and communicate with an external terminal over a network. The computer-readable instructions, when executed by the processor, implement a workflow processing method.

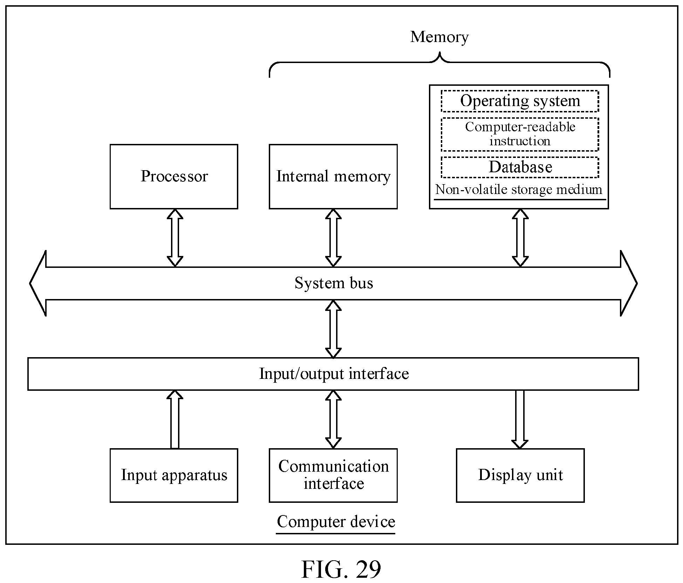

In all embodiments, a computer device is provided. The computer device may be the terminal 110 in the workflow engine system shown in FIG. 1. An internal structure diagram of the computer device may be shown in FIG. 29. The computer device includes a processor, a memory, an I/O interface, a communication interface, a display unit, and an input apparatus. The processor, the memory, and the I/O interface are connected through a system bus. The communication interface, the display unit, and the input apparatus are connected to the system bus through the I/O interface. The processor of the computer device is configured to provide computing and control capabilities. The memory of the computer device includes a non-volatile storage medium and an internal memory. The non-volatile storage medium stores an operating system and computer-readable instructions. The internal memory provides an environment for execution of the operating system and the computer-readable instructions in the non-volatile storage medium. The I/O interface of the computer device is configured to exchange information between the processor and an external device. The communication interface of the computer device is configured for wired or wireless communication with an external terminal. The wireless communication may be realized by Wi-Fi, a mobile cellular network, near field communication (NFC), or other technologies. The computer-readable instructions, when executed by the processor, implement a workflow processing method. The display unit of the computer device is configured to form a visually visible picture, which may be a display screen, a projection apparatus, or a virtual reality imaging apparatus. The display screen of the computer device may be a liquid crystal display screen or an e-ink display screen. The input apparatus of the computer device may be a touch layer covering the display screen, or may be a button, a trackball, or a touchpad disposed on a housing of the computer device, or may be an external keyboard, touchpad, a mouse, or the like.

A person skilled in the art may understand that, the structures shown in FIG. 28 and FIG. 29 are merely block diagrams of a partial structure related to a solution in this application, and does not constitute a limitation to the computer device to which the solution in this application is applied. Specifically, the computer device may include more or fewer components than those shown in the figure, or have some components combined, or have a different component deployment.

In all embodiments, a computer device is further provided, including a memory and a processor. The memory stores computer-readable instructions. The processor, when executing the computer-readable instructions, implements operations of the workflow processing method provided in any one or more embodiments of this application.

In all embodiments, a computer-readable storage medium is provided, having computer-readable instructions stored therein. The computer-readable instructions, when executed by a processor, implement the operations of the workflow processing method provided in any one or more embodiments of this application.

In all embodiments, a computer program product is provided, including computer-readable instructions. The computer-readable instructions, when executed by a processor, implement the operations of the workflow processing method provided in any one or more embodiments of this application.

User information (including, but not limited, to user equipment information, user personal information, and the like) and data (including, but not limited to, data for analysis, stored data, displayed data, and the like) involved in this application are all authorized by the user or information and data fully authorized by all parties. Collection, use, and processing of relevant data require to comply with relevant laws, regulations, and standards of relevant countries and regions.

A person of ordinary skill in the art may understand that all or some of procedures of the method in the foregoing embodiments may be implemented by computer-readable instructions instructing relevant hardware. The computer-readable instructions may be stored in a non-volatile computer-readable storage medium. When the computer-readable instructions are executed, the procedures of the foregoing method embodiments may be implemented. Any reference to a memory, a database, or another medium used in the embodiments provided this application may include at least one of a non-volatile memory and a volatile memory. The non-volatile memory may include a read-only memory (ROM) a magnetic tape, a floppy disk, a flash memory, an optical memory, a high density embedded non-volatile memory, a resistive memory (ReRAM), a magnetoresistive random access memory (MRAM), a magnetoresistive random access memory (FRAM), a phase change memory (PCM), a graphene memory, and the like. The non-volatile memory may include a random access memory (RAM) or an external cache. By way of description and not limitation, the RAM may be in various forms, such as a static random access memory (SRAM), a dynamic random access memory (DRAM), or the like. The databases involved in the embodiments provided in this application may include at least one of a relational database and a non-relational database. The non-relational database may include a blockchain-based distributed database, and the like, which is not limited thereto. The processor involved in the embodiments provided in this application may be a general purpose processor, a central processing unit, a graphics processing unit, a digital signal processor, a programmable logic device, a data processing logic device based on quantum computing, and the like, which is not limited thereto.

Technical features of the foregoing embodiments may be randomly combined. To make description concise, not all possible combinations of the technical features in the foregoing embodiments are described. However, the combinations of these technical features shall be considered as falling within the scope recorded by this specification provided that no conflict exists.

The foregoing embodiments only show several implementations of this application and are described in detail, but are not to be construed as a limit to the patent scope of this application. For a person of ordinary skill in the art, several transformations and improvements can be made without departing from the idea of this application. These transformations and improvements all belong to the protection scope of this application. Therefore, the protection scope of this application shall be subject to the appended claims.

## Claims

1. A workflow processing method, executable by a computer device, the method comprising:
acquiring a to-be-executed task instance corresponding to a target workflow;
determining a pointing relationship between a plurality of subtask instances of the task instance according to a process data structure of the task instance, and sequentially loading and executing, starting with the first subtask instance of the task instance, the subtask instances according to the pointing relationship;
generating, if a target subtask instance indicating a signal callback subtask is currently loaded, a callback interface for effecting a callback of the target subtask instance, and suspending loading and execution of the subtask instances of the task instance; and
resuming, from the target subtask instance, loading and execution of the subtask instances of the task instance after the callback interface is invoked.

2. The method according to claim 1, wherein the acquiring a to-be-executed task instance corresponding to a target workflow comprises:
creating, when an execution instruction for the target workflow is triggered, the task instance corresponding to the target workflow in a task instance table of a database; the task instance table being configured for recording task instance IDs and the process data structure of the task instance, the process data structure comprising subtask instance IDs and the pointing relationship between the subtask instances;
pushing a task instance ID of the created task instance to a task instance message queue;
consuming a task instance ID from the task instance message queue; and
determining a to-be-executed task instance according to the consumed task instance ID.

3. The method according to claim 2, wherein the method further comprises:
if the first subtask of the target workflow is a webhook trigger,
triggering the execution instruction for the target workflow when a network request initiated to a trigger address of the target workflow is received;
wherein the trigger address of the target workflow is generated, when the target workflow is created, according to a token assigned to the webhook trigger in a case that the webhook trigger is used as the first subtask of the target workflow.

4. The method according to claim 2, wherein the method further comprises:
if the first subtask of the target workflow is an instruction trigger,
triggering the execution instruction for the target workflow when a trigger instruction for the target workflow transmitted by a target application is received through an instruction callback interface;
wherein the trigger instruction of the target workflow is configured, when the target workflow is created, for the instruction trigger in a case that the instruction trigger is used as the first subtask of the target workflow.

5. The method according to claim 4, wherein the triggering the execution instruction for the target workflow when a trigger instruction for the target workflow transmitted by a target application is received through an instruction callback interface comprises:
after the target application logged in with a first account receives a session message transmitted by a second account, receiving, through the instruction callback interface, the session message forwarded by the target application;
acquiring a trigger instruction and an execution parameter from the session message;
determining a target workflow corresponding to the trigger instruction; and
triggering an execution instruction for the target workflow according to the execution parameter;
wherein when registered, the first account is configured to forward the received session message to the instruction callback interface.

6. The method according to claim 5, wherein before the triggering an execution instruction for the target workflow according to the execution parameter, the method further comprises:
verifying whether the second account transmitting the session message has an execution permission for the trigger instruction; and
triggering the execution instruction for the target workflow according to the execution parameter when the verification is passed;
wherein an authorized account with the execution permission for the trigger instruction is configured, when the target workflow is created, for the instruction trigger in a case that the instruction trigger is used as the first subtask of the target workflow.

7. The method according to claim 2, wherein the method further comprises:
if the first subtask of the target workflow is a timed trigger,
triggering the execution instruction for the target workflow when a trigger time configured for the target workflow is met;
wherein the trigger time for the target workflow is configured, when the target workflow is created, for the timed trigger in a case that the timed trigger is used as the first subtask of the target workflow.

8. The method according to any one of claims 1 to 7, wherein the determining a pointing relationship between a plurality of subtask instances of the task instance according to a process data structure of the task instance, and sequentially loading and executing, starting with the first subtask instance of the task instance, the subtask instances according to the pointing relationship comprises:
pushing a subtask instance ID corresponding to the first subtask instance to a subtask instance message queue;
consuming a subtask instance ID from the subtask instance message queue;
loading and executing a current subtask instance according to the consumed subtask instance ID;
determining, after execution of the current subtask instance, a subtask instance pointed to by the current subtask instance; and
returning to, after a subtask instance ID corresponding to the subtask instance pointed to is pushed to the subtask instance message queue, the operation of consuming a subtask instance ID from the subtask instance message queue to continue until all the subtask instances of the task instance are executable.

9. The method according to claim 8, wherein the pushing a subtask instance ID corresponding to the first subtask instance to a subtask instance message queue comprises:
pushing, in a case that the current subtask instance points to a plurality of subtask instances, respective subtask instance IDs of the plurality of subtask instances pointed to to the subtask instance message queue; and
the consuming a subtask instance ID from the subtask instance message queue comprises:
consuming the plurality of subtask instance IDs respectively from the subtask instance message queue through distributed execution nodes, and then concurrently loading and executing the plurality of corresponding subtask instances.

10. The method according to claim 8, wherein the method further comprises:
persisting the subtask instance pointed to to a subtask instance table of a database after the subtask instance pointed to by the current subtask instance is determined; the subtask instance table being configured for recording subtask instance IDs, and running statuses and execution data of subtask instances;
initializing the running status of the subtask instance to Unprocessed; and
updating, after the subtask instance is executed, the running status of the subtask instance to Completed in the subtask instance table, and updating the execution data of the subtask instance.

11. The method according to claim 8, wherein the method further comprises:
parsing the task instance, obtaining global variables of the comprised subtask instances, and forming and storing a global variable table; the global variables comprising global input variables and global output variables;
updating the global variable table according to corresponding execution data after the current subtask instance is executed; and
loading the updated global variable table, obtaining input data corresponding to the global input variable of the subtask instance pointed to, and executing, according to the input data, the subtask instance pointed to.

12. The method according to claim 8, wherein the generating, if a target subtask instance indicating a signal callback subtask is currently loaded, a callback interface for effecting a callback of the target subtask instance, and suspending loading and execution of the subtask instances of the task instance, and resuming, from the target subtask instance, loading and execution of the subtask instances of the task instance after the callback interface corresponding to the target subtask instance is invoked comprises:
generating, if the target subtask instance of the signal callback type is currently consumed from the subtask instance message queue and the corresponding callback interface is not generated for the target subtask instance, the callback interface corresponding to the target subtask instance, waiting for a call of the callback interface, and pushing the subtask instance ID corresponding to the target subtask instance to the subtask instance message queue again after the callback interface is invoked; and
determining, if the target subtask instance of the signal callback type is currently consumed from the subtask instance message queue and the corresponding callback interface has been generated for the target subtask instance, that the target subtask instance has been executed, updating execution data of the target subtask instance according to an execution result received when the callback interface is invoked, and resuming loading and execution of the subtask instances of the task instance after a subtask instance ID corresponding to a subtask instance pointed to by the target subtask instance is pushed to the subtask instance message queue.

13. A workflow processing apparatus, the apparatus comprising:
an acquisition module configured to acquire a to-be-executed task instance corresponding to a target workflow; and
an execution module configured to determine a pointing relationship between a plurality of subtask instances of the task instance according to a process data structure of the task instance, and sequentially load and execute, starting with the first subtask instance of the task instance, the subtask instances according to the pointing relationship;
the execution module being further configured to generate, if a target subtask instance indicating a signal callback subtask is currently loaded, a callback interface for effecting a callback of the target subtask instance, and suspend loading and execution of the subtask instances of the task instance; and resume, from the target subtask instance, loading and execution of the subtask instances of the task instance after the callback interface corresponding to the target subtask instance is invoked.

14. A workflow processing system, the system comprising a scheduling node, a distributed execution node, and a database,
the scheduling node being configured to create, when an execution instruction of a target workflow is received, a task instance corresponding to the target workflow in the database;
the execution node being configured to acquire, from the database, a to-be-executed task instance corresponding to the target workflow, determine a pointing relationship between a plurality of subtask instances of the task instance according to a process data structure of the task instance, and sequentially load and execute, starting with the first subtask instance of the task instance, the subtask instances according to the pointing relationship;
the execution node being further configured to generate, if a target subtask instance indicating a signal callback subtask is currently loaded, a callback interface for effecting a callback of the target subtask instance, and suspend loading and execution of the subtask instances of the task instance; and
the execution node being further configured to resume, from the target subtask instance, loading and execution of the subtask instances of the task instance after the callback interface corresponding to the target subtask instance is invoked.

15. A computer device, comprising a memory and a processor, the memory storing computer-readable instructions, and the processor, when executing the computer-readable instructions, implementing operations of the method according to any one of claims 1 to 12.

16. A computer-readable storage medium, having computer-readable instructions stored therein, the computer-readable instructions, when executable by a processor, implementing operations of the method according to any one of claims 1 to 12.

17. A computer program product, comprising computer-readable instructions, the computer-readable instructions, when executable by a processor, implementing operations of the method according to any one of claims 1 to 12.
